# EUROPEAN PATENT APPLICATION

(11) **EP 4 838 479 A1**
(43) Date of publication of application: **11.11.2026**
(21) Application number: 24918861.6
(22) Date of filing: 25.11.2024
(51) Int. Cl.: G06T 19/20, G06T 7/50, G06T 11/60, G06F 3/14, G06F 3/0484

(54) **ELECTRONIC DEVICE FOR EDITING IMAGE AND OPERATION METHOD THEREFOR**

(30) Priority: 15.01.2024 KR 20240005864; 08.03.2024 KR 20240033200
(71) Applicant: Samsung Electronics Co., Ltd., Suwon-si, Gyeonggi-do 16677 (KR)
(72) Inventor: KIM, Sooryuh, Suwon-si Gyeonggi-do 16677 (KR); SON, Dongil, Suwon-si Gyeonggi-do 16677 (KR); SON, Chaeyeon, Suwon-si Gyeonggi-do 16677 (KR); AHN, Sunggeun, Suwon-si Gyeonggi-do 16677 (KR); LIM, Kwangyong, Suwon-si Gyeonggi-do 16677 (KR); CHOI, Bokun, Suwon-si Gyeonggi-do 16677 (KR)
(74) Representative: Nederlandsch Octrooibureau
(86) International application number: PCT/KR2024/018770
(87) International publication number: WO 2025/154933

(57) **Abstract**

According to one embodiment, an electronic device may comprise a first display, at least one processor, and a memory for storing instructions. The instructions, when executed by the at least one processor, may instruct the electronic device to select a first image on the basis of a first user input for selecting the first image. The instructions, when executed by the at least one processor, may instruct the electronic device to identify first depth information about objects included in the first image. The instructions, when executed by the at least one processor, may instruct the electronic device to identify a first object and a background object among the objects included in the first image on the basis of the first depth information. The instructions, when executed by the at least one processor, may instruct the electronic device to control the first display to display a second object generated by converting the first object into a three-dimensional object on the basis of the first depth information, and a background image corresponding to the background object. The instructions, when executed by the at least one processor, may instruct the electronic device to control the first display to display a first mark indicating that the second object is a target object, on the basis of identifying that the first object is an object to which three-dimensional editing is applicable. Various other embodiments are also possible.

## Description

### [Technical Field]

The disclosure relates to an electronic device editing an image and a method for operating the same, according to an embodiment.

### [Background Art]

An electronic device may provide a program for editing an image. An image may include object(s), and a user may edit object(s) included in an image through a program for editing the image.

Meanwhile, an image may be generated using an artificial intelligence algorithm (e.g., generative artificial intelligence). An artificial intelligence algorithm may receive an image and generate a new image based on the received image.

The above-described information may be provided as related art for the purpose of aiding understanding of the disclosure. No claim or determination is made as to whether any of the foregoing is applicable as background art in relation to the disclosure.

### [Detailed Description of the Invention]

### [Technical Solution]

According to an embodiment, an electronic device may include a first display, at least one processor, and memory storing instructions. The instructions may, when executed by the at least one processor, cause the electronic device to select a first image based on a first user input for selecting the first image. The instructions may, when executed by the at least one processor, cause the electronic device to identify first depth information for objects included in the first image. The instructions may, when executed by the at least one processor, cause the electronic device to identify a first object and a background object among the objects included in the first image, based on the first depth information. The instructions may, when executed by the at least one processor, cause the electronic device to control the first display to display a second object generated by converting the first object to a three-dimensional (3D) object, and a background image corresponding to the background object, based on the first depth information. The instructions may, when executed by the at least one processor, cause the electronic device to, based on identifying that the first object is an object to which 3D editing is applied, control the first display to display a first mark indicating that the second object is a target object.

According to an embodiment, a method for operating an electronic device may include an operation of selecting a first image based on a first user input for selecting the first image. The method may include an operation of identifying first depth information for objects included in the first image. The method may include an operation of identifying a first object and a background object among the objects included in the first image, based on the first depth information. The method may include an operation of displaying a second object generated by converting the first object to a 3D object, and a background image corresponding to the background object, based on the first depth information. The method may include an operation of displaying a first mark indicating that the second object is a target object, based on identifying that the first object is an object to which 3D editing is applied.

According to an embodiment, in a storage medium storing computer-readable instructions, the instructions, when executed by at least one processor of an electronic device, may cause the wearable device to perform at least one operation. The at least one operation may include an operation of selecting a first image based on a first user input for selecting the first image. The at least one operation may include an operation of identifying first depth information for objects included in the first image. The at least one operation may include an operation of identifying a first object and a background object among the objects included in the first image, based on the first depth information. The at least one operation may include an operation of displaying a second object generated by converting the first object to a 3D object, and a background image corresponding to the background object, based on the first depth information. The at least one operation may include an operation of displaying a first mark indicating that the second object is a target object, based on identifying that the first object is an object to which 3D editing is applied.

### [Brief Description of Drawings]

FIG. 1 is a block diagram illustrating an electronic device in a network environment according to an embodiment.
FIG. 2 is a front view illustrating an electronic device according to an embodiment.
FIG. 3 is a rear view illustrating an electronic device according to an embodiment.
FIG. 4 is a block diagram illustrating an electronic device and a server, according to an embodiment.
FIG. 5 is a view illustrating an editing module, according to an embodiment.
FIG. 6 is a flowchart illustrating a method for operating an electronic device editing an image, according to an embodiment.
FIG. 7 is a view illustrating an operation of editing an image, according to an embodiment.
FIG. 8 is a flowchart illustrating a method for operating an electronic device displaying a 3D object, according to an embodiment.
FIG. 9 is a flowchart illustrating a method for operating an electronic device displaying a mark indicating a target object, according to an embodiment.
FIG. 10 is a view illustrating a view point for editing, according to an embodiment.
FIG. 11 is a flowchart illustrating a method for operating an electronic device displaying a background of an editing space, according to an embodiment.
FIG. 12 is a view illustrating an editing space, according to an embodiment.
FIG. 13 is a flowchart illustrating a method for operating an electronic device sensing a surrounding environment and setting a partial area of the surrounding environment as an editing space, according to an embodiment.
FIG. 14 is a view illustrating a mode change, according to an embodiment.
FIG. 15 is a flowchart illustrating a method for operating an electronic device identifying depth information based on field of view (FOV), according to an embodiment.
FIG. 16 is a view illustrating a change in FOV, according to an embodiment.
FIG. 17 is a flowchart illustrating a method for operating an electronic device displaying a preview, according to an embodiment.
FIG. 18 is a view illustrating a preview, according to an embodiment.
FIG. 19 is a flowchart illustrating a method for operating an electronic device converting an object to 3D based on a plurality of images, according to an embodiment.
FIG. 20 is a flowchart illustrating a method for operating an electronic device converting an object to 3D by extracting feature points, according to an embodiment.
FIG. 21 is a flowchart illustrating a method for operating an electronic device applying matte painting, according to an embodiment.
FIG. 22 is a view illustrating an operation of converting an image to 3D, according to an embodiment.
FIG. 23 is a view illustrating editing of an image, according to an embodiment.
FIG. 24 is a flowchart illustrating a method for operating an electronic device providing a preset, according to an embodiment.
FIG. 25 is a view illustrating editing of an image, according to an embodiment.
FIG. 26 is a view illustrating editing of an image, according to an embodiment.
FIG. 27 is a view illustrating editing of an image, according to an embodiment.
FIG. 28 is a view illustrating editing of an image, according to an embodiment.
FIG. 29 is a view illustrating an operation of providing a preset, according to an embodiment.
FIG. 30 is a view illustrating a change in a property of an object, according to an embodiment.
FIG. 31 is a view illustrating a change in a property of a space, according to an embodiment.
FIG. 32 is a view illustrating gaze tracking, according to an embodiment.
FIG. 33 is a view illustrating an operation of indicating that editing is in progress, according to an embodiment.
FIG. 34 is a view illustrating an icon indicating that editing is in progress, according to an embodiment.
FIG. 35 is a view illustrating an operation of displaying an editing state on an external display, according to an embodiment.
FIG. 36 is a view illustrating copying of an object to another image, according to an embodiment.
FIG. 37 is a view illustrating copying of an object to an empty space or a surrounding environment, according to an embodiment.
FIG. 38 is a view illustrating a conversion history of a property of an object, according to an embodiment.
FIG. 39 is a view illustrating editing by a plurality of users, according to an embodiment.

### [Mode for Carrying out the Invention]

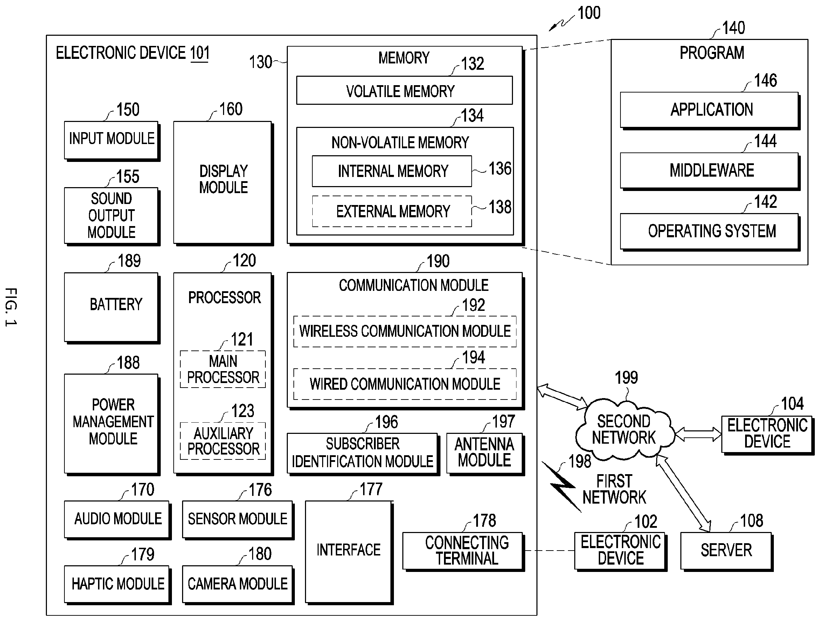

FIG. 1 is a block diagram illustrating an electronic device in a network environment, according to an embodiment.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing recordings. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or a conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

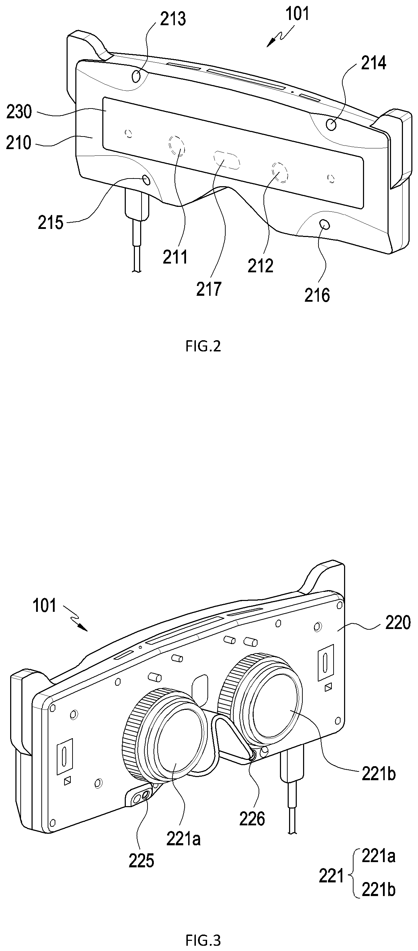

According to an embodiment, the electronic device 101 may be a device worn by a user. For example, the electronic device 101 may be smart glasses or a head-mounted display (HMD) device, but the type of the electronic device 101 is not limited thereto. According to an embodiment, the electronic device 101 may be a device not worn by a user. For example, the electronic device 101 may be a laptop or a mobile phone, but the type of the electronic device 101 is not limited thereto. The operations of the electronic device 101 described below may be applied to the electronic device 101 worn by a user and the electronic device 101 not worn by a user. An example of the electronic device 101 worn by a user is described with reference to FIGS. 2 and 3.

FIG. 2 is a view illustrating a front surface of an electronic device 101, according to an embodiment.

FIG. 3 is a rear view illustrating an electronic device 101 according to an embodiment.

Referring to FIGS. 2 and 3, according to an embodiment, a video see through (VST) camera module 211, 212, a plurality of camera modules 213, 214, 215, 216, a depth sensor 217, and/or a second display 230 may be disposed on a second surface 210 of a housing. For example, the VST camera modules 211 and 212, the plurality of camera modules 213, 214, 215, and 216, the depth sensor 217, and/or the second display 230 may be exposed through an opening formed in the second surface 210 of the housing. In an embodiment, the second surface 210 of the housing may be a surface opposite to the first surface 220 of the housing facing the face when the electronic device 101 is worn on the user's face.

According to an embodiment, the VST camera modules 211, 212 may acquire an image related to a surrounding environment of the electronic device 101. For example, an image acquired by the VST camera modules 211, 212 may be provided to a user as at least a part of VST content.

According to an embodiment, the plurality of camera modules 213, 214, 215, 216 may acquire an image in a state in which the electronic device 101 is worn by a user. An image acquired through the plurality of camera modules 213, 214, 215, 216 may be used for simultaneous localization and mapping (SLAM), six degrees of freedom (6DoF), subject recognition, and/or tracking. In an embodiment, the depth sensor 217 may be used for identifying the distance to the object, such as time of flight (TOF). In an embodiment, alternatively or additionally to the depth sensor 217, the plurality of camera modules 213, 214, 215, and 216 may identify the distance to the object.

In an embodiment, the second display 230 (also referred to as an "external display") may be a display for providing a screen before (and after) the electronic device 101 is worn by the user (e.g., on the user's face). For example, in a state in which the electronic device 101 is powered on and the electronic device 101 is not worn on a user, the second display 230 may display a screen. For example, in a state in which the electronic device 101 is powered on and the electronic device 101 is worn on a user, the second display 230 may display a screen.

In an embodiment, the second display 230 may include a touch sensor (or touch panel) for receiving a user input. For example, the second display 230 may include a touch sensor for receiving a user input to execute a function of the electronic device 101 while a screen is displayed through the second display 230 before (and after) the electronic device 101 is worn on a user.

In an embodiment, the size of the second display 230 may be implemented to differ according to embodiments. For example, the size of the second display 230 may be implemented to have a size in which the second display 230 does not overlap the VST camera modules 211 and 212 and the depth sensor 217. For example, the size of the second display 230 may be implemented to have a size in which the second display covers the VST camera modules 211 and 212 and the depth sensor 217 as shown in FIG. 2. For example, the size of the second display 230 may be implemented to be substantially the same as the size of the second surface 210 of the housing.

According to an embodiment, when the size of the second display 230 is implemented to cover the VST camera modules 211, 212 or to be substantially the same as a size of one side of the housing, the VST camera modules 211, 212 may be under display cameras (UDCs) disposed below the second display.

In an embodiment, the second display 230 may be implemented in various forms. For example, the second display 230 may be implemented in the form of a U cut or notch not to overlap the VST camera modules 211 and 212 and the depth sensor 217.

According to an embodiment, camera modules 225 and 226 for face recognition and/or the first display 221 (and/or lens) may be disposed on the first surface 220 of the housing.

In an embodiment, the camera modules 225 and 226 for face recognition may be used for recognizing the user's face.

In an embodiment, the first display 221 (also referred to as an "internal display") (and/or lens) may be disposed on the first surface 220 of the electronic device 101 facing the face when the electronic device 101 is worn on the user's face. According to an embodiment, the first display 221 (and/or a lens) may display a screen in a state in which the electronic device 101 is worn on a user. According to an embodiment, the first display 221 may include a first sub-display 221a corresponding to a right eye of a user and a second sub-display 221b corresponding to a left eye of the user. For example, an image displayed on the first display 221 may include a first sub image displayed on the first sub-display 221a and a second sub image displayed on the second sub-display 221b. For example, a user may recognize a 3D image (or a 3D object) by recognizing the first sub image with a right eye and recognizing the second sub image with a left eye. For example, a user may also recognize a two-dimensional (2D) image (or a 2D object) by recognizing the first sub image with a right eye and recognizing the second sub image with a left eye.

In an embodiment, although not shown in FIGS. 2 and 3, the electronic device 101 may further include one or more components. For example, the electronic device 101 may include a proximity sensor, a touch sensor, and/or a pressure sensor for detecting that the electronic device 101 is worn on a user (e.g., a face of a user). For example, the electronic device 101 may include a fingerprint sensor (an optical or ultrasonic fingerprint sensor). For example, the electronic device 101 may include at least one key (or button). For example, the electronic device 101 may include a sensor for gaze tracking of a user.

In an embodiment, the electronic device 101 may not include some of the components shown in FIGS. 2 and 3. For example, the electronic device 101 may not include the camera modules 215 and 216 among the plurality of camera modules 213, 214, 215 and 216.

According to an embodiment, the electronic device 101 may include at least one of the components of the electronic device 101 illustrated in FIG. 1.

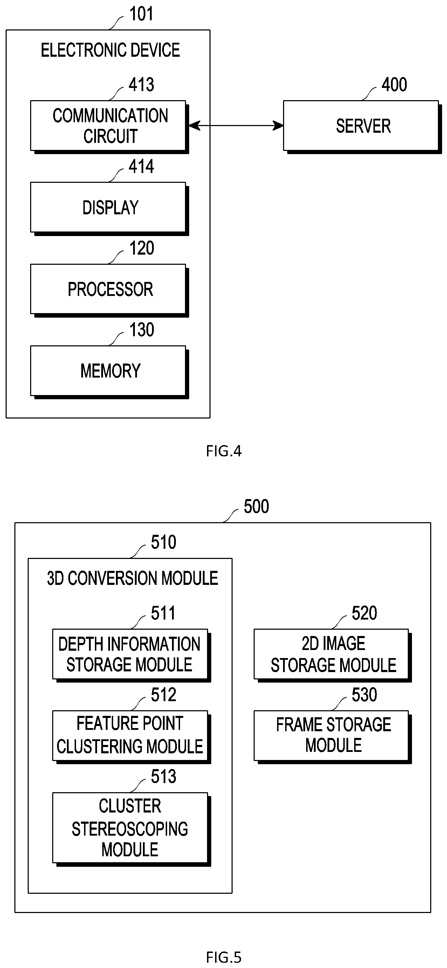

FIG. 4 is a block diagram illustrating an electronic device 101 and a server 400, according to an embodiment.

According to an embodiment, the server 400 of FIG. 4 may be the server 108 of FIG. 1.

Referring to FIG. 4, according to an embodiment, the electronic device 101 may include a processor 120 and memory 130. The processor 120 of the electronic device 101 may be the processor 120 of FIG. 1. The memory 130 of the electronic device 101 may be the memory 130 of FIG. 1.

According to an embodiment, the processor 120 of the electronic device 101 may be referred to as a controller. An operation of the electronic device 101 according to an embodiment may be controlled by the processor 120 of the electronic device 101. The electronic device 101 performing a specific operation may mean that the electronic device 101 or a component included in the electronic device 101 is controlled by the processor 120 of the electronic device 101. The processor 120 may be circuitry performing processing. The electronic device 101 may include one or more processors 120. Operation(s) of the electronic device 101 may be processed by one processor 120. Some of operations of the electronic device 101 may be processed by some of a plurality of processors 120, and other operations of the electronic device 101 may be processed by other processors 120 among the plurality of processors 120. Hereinafter, even when the processor 120 is implemented as a plurality of processors, description is made as "an operation of the electronic device 101" or "an operation of the processor 120" for convenience of description. According to an embodiment, the memory 130 may include instructions configured to cause at least one operation. The instructions, when executed by the processor 120 of the electronic device 101, may cause the electronic device 101 to perform at least one operation. The electronic device 101 may include one or more memories 130. Hereinafter, "memory 130" may be one memory 130 or a plurality of memories 130. Instructions may be stored in one memory 130. Some of instructions may be stored in some of a plurality of memories 130, and other instructions may be stored in other memories 130 among the plurality of memories 130. Hereinafter, even when the memory 130 is implemented as a plurality of memories, description is made as "memory 130" for convenience of description. According to an embodiment, a computer readable storage medium storing instructions configured to cause at least one operation related to the electronic device 101 may be provided.

Referring to FIG. 4, according to an embodiment, the electronic device 101 may include a communication circuit 413 (e.g., a circuit included in the communication module 190 of FIG. 1). The electronic device 101 may include a display 414 (e.g., a display included in the display module 160 of FIG. 1). For example, when the electronic device 101 is implemented as a device worn by a user, the display 414 may include the first display 221 of FIG. 3 and the second display 230 of FIG. 2.

According to an embodiment, an artificial intelligence algorithm may be included in the electronic device 101. According to an embodiment, an artificial intelligence algorithm may be included in the server 400. According to an embodiment, an artificial intelligence algorithm may be included in both the electronic device 101 and the server 400. According to an embodiment, some of an artificial intelligence algorithm may be included in the electronic device 101, and other parts of the artificial intelligence algorithm may be included in the server 400. A method in which an artificial intelligence algorithm is applied in the electronic device 101 may be referred to as an on-device method. A method in which an artificial intelligence algorithm is applied in the server 101 may be referred to as a server method. For example, in the case of the on-device method, the electronic device 101 may process data based on an artificial intelligence algorithm included in the electronic device 101. For example, in the case of the server method, the electronic device 101 may transmit data to the server 400 through the communication circuit 413 and receive, from the server 400 through the communication circuit 413, a result of processing the data based on an artificial intelligence algorithm included in the server 400. The electronic device 101 may use the on-device method and/or the server method. Except for a case in which the on-device method and the server method are described separately, the following embodiments may be applied to the on-device method and the server method.

According to an embodiment, an artificial intelligence algorithm may include a first artificial intelligence algorithm and a second artificial intelligence algorithm. According to an embodiment, the first artificial intelligence algorithm may be an algorithm for 3D conversion of an image or an object included in an image. For example, the first artificial intelligence algorithm may be trained to receive an image or an object included in an image and output a result of 3D conversion of the image or the object included in the image. A method of implementing the first artificial intelligence algorithm is not limited. According to an embodiment, the second artificial intelligence algorithm may be an algorithm for identifying an object to which 3D editing is applied (e.g., an object capable of 3D editing) among objects included in an image. For example, the second artificial intelligence algorithm may be trained to receive an image or an object included in an image and output an object to which 3D editing is applied (e.g., an object capable of 3D editing) among objects included in the image. A method of implementing the second artificial intelligence algorithm is not limited.

FIG. 5 is a view illustrating an editing module, according to an embodiment.

Referring to FIG. 5, according to an embodiment, an editing module 500 may include a 3D conversion module 510, a 2D image storage module 520, and a frame storage module 530. The editing module 500 may have a hardware structure and/or a software structure. For example, the editing module 500 may be implemented as hardware. For example, the editing module 500 may be implemented as software. For example, the editing module 500 may be implemented as a combination of hardware and software. According to an embodiment, the editing module 500 (e.g., 510, 520, 530) of FIG. 5 may be included in the electronic device 101. According to an embodiment, the editing module 500 (e.g., 510, 520, 530) of FIG. 5 may be included in the server 400. According to an embodiment, some of the editing module 500 (e.g., 510, 520, 530) of FIG. 5 may be included in the electronic device 101, and other parts of the editing module 500 (e.g., 510, 520, 530) of FIG. 5 may be included in the server 400.

According to an embodiment, the 3D conversion module 510 may include a depth information storage module 511, a feature point clustering module 512, and a cluster solidification module 513. The depth information storage module 511 may be a module storing depth information. For example, the depth information storage module 511 may store depth information based on the first artificial intelligence algorithm. The feature point clustering module 512 may be a module clustering feature points of an image or object(s) included in an image. The cluster solidification module 513 may be a module solidifying a cluster. For example, when the 3D conversion module 510 is included in the electronic device 101, the electronic device 101 may convert an image or an object included in an image to 3D using the 3D conversion module 510. For example, when the 3D conversion module 510 is included in the server 400, the server 400 may convert an image or an object included in an image to 3D using the 3D conversion module 510, and the electronic device 101 may receive a result of the 3D conversion performed by the server 400 from the server 400 through the communication circuit 413. According to an embodiment, the 2D image storage module 520 may be a module storing a 2D image. For example, the 2D image storage module 520 may store a 2D image input to the 3D conversion module 510. For example, the 2D image storage module 520 may store a 2D image generated by including a result of 3D conversion based on the 3D conversion module 510. According to an embodiment, the frame storage module 530 may be a module storing a frame of an image.

The descriptions of FIGS. 1 to 5 may be applied to embodiments described below. When describing the embodiments below, parts overlapping the descriptions of FIGS. 1 to 5 may be omitted. Parts omitted in the description of each drawing or each embodiment may be understood by referring to the descriptions of other drawings or embodiments.

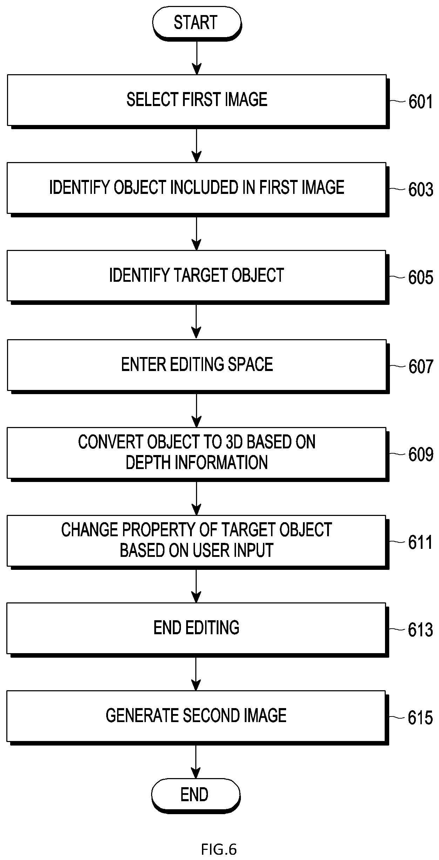

The operations of the electronic device 101 are briefly described as follows. According to an embodiment, the electronic device 101 (e.g., the processor 120) may select a 2D image (e.g., a first image). The electronic device 101 may convert the 2D image to 3D in order to edit the image. The electronic device 101 may display a 3D editing space on the display 414 by converting the 2D image to 3D. Displaying the 3D editing space may be displaying a screen including an object to which 3D editing is applied (or an object capable of 3D editing). For example, converting the 2D image to 3D (or displaying the 3D editing space) may be converting an object included in the 2D image to a 3D object and placing the converted object in a surrounding space sensed through VST (e.g., an image related to a surrounding environment acquired through the VST camera modules 211, 212) (e.g., a first mode described below). For example, converting the 2D image to 3D (or displaying the 3D editing space) may be converting an object (e.g., a candidate object described below) included in the 2D image to a 3D object and generating a background (e.g., a background image described below) to be included in the 3D image based on a background (e.g., a background object described below) of the 2D image (e.g., a second mode described below). For example, in the case of the electronic device 101 of FIGS. 2 and 3, while displaying the 3D editing space on the first display 221, the electronic device 101 may display an image corresponding to the 3D editing space on the second display 230. The electronic device 101 may edit an image (or an object included in an image) in the 3D editing space. The electronic device 101 may display an object having a property changed based on editing (or an image including an object having a property changed) on the display 414. For example, in the case of the electronic device 101 of FIGS. 2 and 3, while displaying an object having a property changed based on editing (or an image including an object having a property changed) on the first display 221, the electronic device 101 may display an object corresponding to the object having a property changed (or an image including an object corresponding to the object having a property changed) on the second display 230. The electronic device 101 may display a preview in the 3D editing space. The preview may correspond to the 2D image (e.g., the first image). The preview may indicate a result of editing or a direction of editing. The electronic device 101 may generate a 2D image (e.g., a second image) reflecting a result of editing in the 3D editing space based on an end of editing. The operations of the electronic device 101 may be described in detail with reference to the embodiments (e.g., the embodiments of FIGS. 1 to 5) and the embodiments described below (the embodiments of FIGS. 6 to 39). Although each of the embodiments is disclosed in separate drawings and separate paragraphs, this is only for convenience of description, and at least some of the above-described embodiments and at least some of the following embodiments may be applied together. At least some of the above-described embodiments and at least some of the following embodiments may be omitted.

FIG. 6 is a flowchart illustrating an operation method of the electronic device 101 according to an embodiment. FIG. 6 may be described with reference to the above described embodiments and embodiments described below.

At least some of the operations of FIG. 6 may be omitted. The order of the operations of FIG. 6 may be changed. Operations other than the operations of FIG. 6 may be performed before, while, or after performing the operations of FIG. 6.

Referring to FIG. 6, in operation 601, according to an embodiment, the electronic device 101 (e.g., the processor 120) may select a first image. The electronic device 101 may select the first image based on a first user input for selecting the first image. The electronic device 101 may select the first image based on a first user input for selecting the first image from among at least one image stored in the memory 130. The electronic device 101 may select the first image based on a first user input for selecting the first image from among at least one image while an execution screen of a gallery application is displayed. The electronic device 101 may select a portion of a screen displayed on the display 414 (e.g., a screen displaying an image or a video) corresponding to a first area as the first image, based on a first user input for selecting the first area of the screen displayed on the display 414. The electronic device 101 may select a screenshot of a screen as the first image, based on a first user input for causing generation of a screenshot of the screen while the screen (e.g., a screen displaying an image or a video) is displayed on the display 414.

According to an embodiment, the electronic device 101 may provide different object separation methods, placement methods, and target objects for 3D conversion according to a type of an image selected in operation 601 (e.g., whether the image is a landscape capture or a portrait photograph). This is described below.

According to an embodiment, the electronic device 101 may identify first depth information for objects included in the image selected in operation 601. For example, the electronic device 101 may identify the first depth information for objects included in the image selected in operation 601 based on the first artificial intelligence algorithm. For example, in the case of the on-device method, the electronic device 101 may identify the first depth information by identifying the first depth information for objects included in the selected image based on the first artificial intelligence algorithm included in the electronic device 101. For example, in the case of the server method, the electronic device 101 may identify the first depth information by transmitting information about the selected image to the server 400 and receiving the first depth information from the server 400. The server 400 may identify the first depth information for objects included in the image based on the first artificial intelligence algorithm included in the server 400 and transmit the first depth information to the electronic device 101.

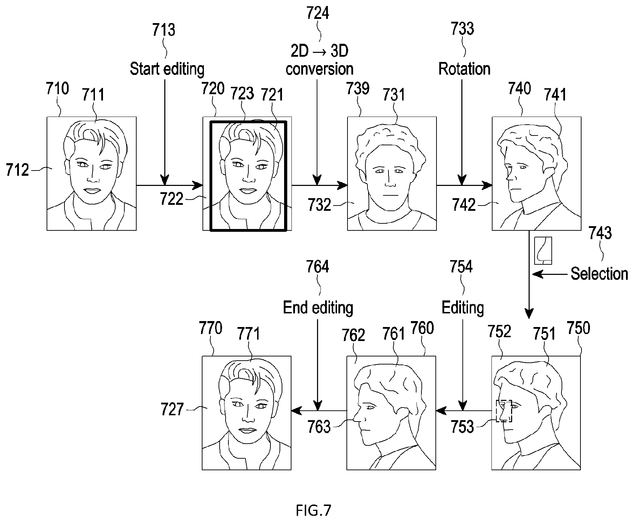

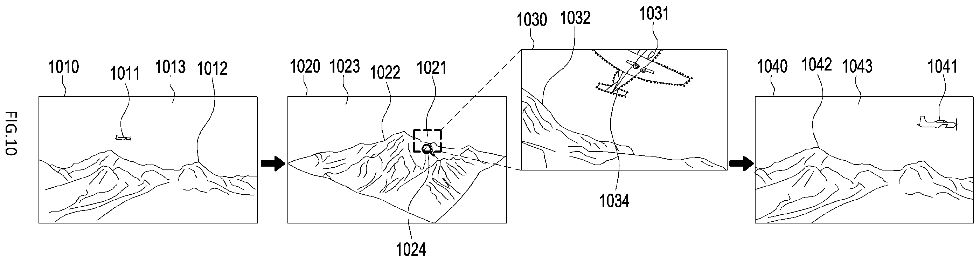

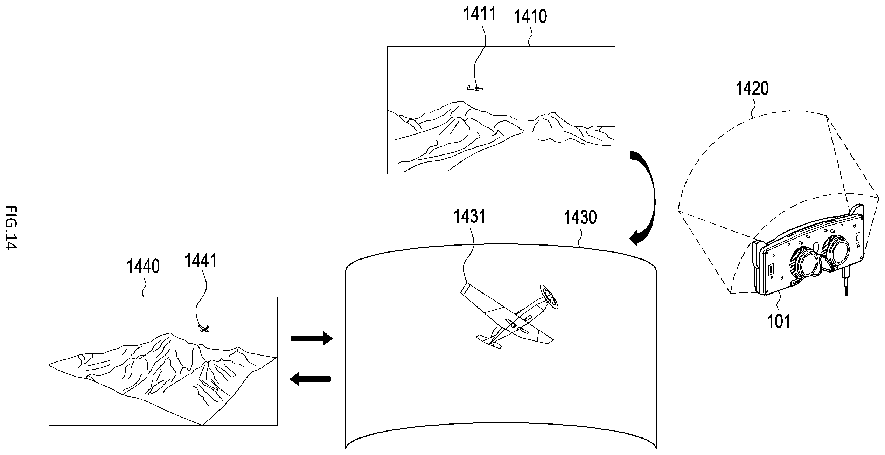

In operation 603, according to an embodiment, the electronic device 101 (e.g., the processor 120) may identify an object (e.g., a first object and/or a background object) included in the first image selected in operation 601. For example, the first image may include a person object, a living creature object, an object, a landscape object, and/or a background object, and the type of the object is not limited. The electronic device 101 may identify object(s) included in the first image based on the first depth information for the first image. For example, the electronic device 101 may include a candidate object and/or a background object based on the first depth information for the first image. A "background object" may be an object that does not satisfy a specified criterion (e.g., a criterion related to depth, size, or focus) among object(s) included in the first image. The specified criterion (e.g., a criterion related to depth, size, or focus) is not limited. A "candidate object" may be an object that satisfies a specified criterion (e.g., a criterion related to depth, size, or focus) among object(s) included in the first image. A candidate object may be an object that is not a background object. A candidate object may be a target object or another object. A "target object" may be an object to which 3D editing is applied (e.g., an object capable of 3D editing). "Another object" may be an object to which 3D editing is not applied (e.g., an object incapable of 3D editing). The target object and the other object is described below. The electronic device 101 may identify a first object (e.g., 711 of FIG. 7, 1011 of FIG. 10, or 1411 of FIG. 14) being a candidate object included in the first image and/or a background object, based on the first depth information for the first image.

In operation 605, according to an embodiment, the electronic device 101 (e.g., the processor 120) may identify a target object among the object(s) identified in operation 603. The electronic device 101 may identify the first object of operation 603 as a target object based on identifying that the first object is an object to which 3D editing is applied (e.g., an object capable of 3D editing). For example, the electronic device 101 may identify the first object as a target object based on identifying that the first object of operation 603 is an object to which 3D editing is applied (e.g., an object capable of 3D editing) based on the second artificial intelligence algorithm. Operation 605 may be an operation of selecting an object to which 3D editing is applied (e.g., an object capable of 3D editing) among object(s) included in the first image. For example, content (e.g., a birthday party) of an image may be determined through scene analysis of the image, and a target object (e.g., an object related to the birthday party) related to the content of the image may be determined. For example, a tendency of a user of the electronic device 101 may be analyzed, and a target object related to the tendency of the user may be determined. A method of identifying a target object is not limited. According to an embodiment, in the case of the on-device method, the electronic device 101 may identify a target object by selecting an object to which 3D editing is applied (e.g., an object capable of 3D editing) among object(s) included in the first image based on the second artificial intelligence algorithm included in the electronic device 101. According to an embodiment, in the case of the server method, the electronic device 101 may identify a target object by transmitting information about the first image to the server 400 and receiving information about an object to which 3D editing is applied (e.g., an object capable of 3D editing) among object(s) included in the first image from the server 400. The server 400 may select an object to which 3D editing is applied (e.g., an object capable of 3D editing) among object(s) included in the first image based on the second artificial intelligence algorithm included in the server 400 and transmit information about the target object to the electronic device 101.

In operation 607, according to an embodiment, the electronic device 101 (e.g., the processor 120) may enter an editing space. Entering the editing space may be displaying a screen for editing an image on the display 414. For example, in the case of the electronic device 101 of FIGS. 2 and 3, the electronic device 101 may display a screen for editing an image (e.g., a screen including an object converted to 3D described below) on the first display 221. For example, a user wearing the electronic device 101 may view the screen for editing an image. According to an embodiment, as described below, the electronic device 101 may display a screen corresponding to the screen for editing an image (e.g., a screen including an object corresponding to an object converted to 3D described below) on the second display 230. For example, another user located around the electronic device 101 may view the screen corresponding to the screen for editing an image. According to an embodiment, the electronic device 101 may enter an editing space (e.g., display a screen for editing) based on a start of editing an image. The electronic device 101 may enter an editing space based on an event (e.g., a user input) for causing entry into the editing space, and the type of the event is not limited. For example, the electronic device 101 may enter an editing space based on operation 601 (e.g., the first user input for selecting the first image). For example, the electronic device 101 may enter an editing space based on a user input (e.g., a user input different from the first user input of operation 601) for causing a start of editing the selected image (e.g., the first image). Entering the editing space may be starting editing of an image. The "editing space" may be a space for editing an image. For example, the editing space may include an editing space of a first mode and an editing space of a second mode. For example, the "first mode" (e.g., a full immersive mode) (e.g., a VR mode) may be editing an image or an object included in an image in a virtual reality (VR) space corresponding to the selected image. The VR space may mean that all objects displayed on the display 414 are virtual objects. For example, the "second mode" (e.g., a half immersive mode) (e.g., an AR mode) may be editing the selected image or an object included in the selected image in an augmented reality (AR) space. The AR space may mean that an object included in an image is converted to a 3D virtual object and the converted object is placed in a surrounding space sensed through VST (e.g., an image related to a surrounding environment acquired through the VST camera modules 211, 212). Operation 609 may be performed for entering the editing space of operation 607.

In operation 609, according to an embodiment, the electronic device 101 (e.g., the processor 120) may convert the first image (or an object included in the first image) to 3D based on the first depth information based on the first artificial intelligence algorithm for the first image (or an object included in the first image). For example, the electronic device 101 may display a second object obtained by converting the first object (e.g., a candidate object) to a 3D object, based on the first depth information, on the display 414. For example, the electronic device 101 may display a background image corresponding to the background object, based on the first depth information, on the display 414. For example, in the first mode (e.g., a VR mode), a second object generated by converting the first object to a 3D object and a background image corresponding to the background object may be displayed together. For example, in the second mode (e.g., an AR mode), a second object generated by converting the first object to a 3D object and a surrounding space sensed through VST (e.g., an image related to a surrounding environment acquired through the VST camera modules 211, 212) may be displayed together. For example, in the case of the electronic device 101 of FIGS. 2 and 3, the electronic device 101 may display a second object generated by converting the first object to a 3D object and/or a background image on the first display 221. In the case of the electronic device 101 of FIGS. 2 and 3, the electronic device 101 may display an object corresponding to the second object generated by converting the first object to a 3D object and/or an image corresponding to the background image on the second display 230. An operation of displaying an object converted to a 3D form and/or an operation of displaying a background image may be described with reference to the embodiments described below.

In operation 611, according to an embodiment, the electronic device 101 (e.g., the processor 120) may change a property of a target object (e.g., the second object of operation 609) based on a second user input for editing an object. The electronic device 101 may change a property of a target object in the editing space based on a second user input for editing an object. The electronic device 101 may change a property of a target object based on a second user input for editing an object while an image (or an object) for editing is displayed. The electronic device 101 may change a property of a target object based on a second user input (e.g., a user input for editing a target object) for the target object among object(s) converted to 3D objects. For example, the electronic device 101 may raise a nose of a person, change a posture of a person, change a size of an object, or modify an appearance of an object, and a method of changing a property of a target object is not limited. For example, the electronic device 101 may display an object reflecting a change in a property of the object converted to 3D of operation 609 on the display 414. For example, in the case of the electronic device 101 of FIGS. 2 and 3, the electronic device 101 may display a third object reflecting a change in a property of the second object on the first display 221. For example, in the case of the electronic device 101 of FIGS. 2 and 3, the electronic device 101 may display an object corresponding to the third object reflecting the change in the property of the second object on the second display 230.

In operation 613, according to an embodiment, the electronic device 101 (e.g., the processor 120) may end editing based on an event for causing an end of editing. For example, the electronic device 101 may end editing based on a user input for causing an end of editing.

In operation 615, according to an embodiment, the electronic device 101 (e.g., the processor 120) may generate a second image based on the end of editing. The electronic device 101 may generate a 2D second image reflecting a result of editing (e.g., a change in a property of an object by operation 611) based on the end of editing. The second image of operation 615 may include a result of conversion of a property of an object included in the first image of operation 601. For example, in the embodiment of FIG. 7, the first image includes a person, and based on editing of raising a nose of the person in the 3D editing space, the second image may include the person with a raised nose.

This is described in more detail with reference to FIG. 7.

FIG. 7 is a view illustrating an operation of editing an image, according to an embodiment.

According to an embodiment, 710 of FIG. 7 is a part describing selection of an image. The electronic device 101 (e.g., the processor 120) may select a first image (e.g., the image of 710) based on a user input. The first image may include a person object 711. The first image may include a background object 712. The electronic device 101 may start (713) editing the first image based on an event for causing a start of editing an image.

According to an embodiment, 720 of FIG. 7 is a part describing selection of a target object. The electronic device 101 (e.g., the processor 120) may identify an object to which 3D editing is applied (e.g., an object capable of 3D editing) among object(s) included in the first image. For example, the electronic device 101 (e.g., the processor 120) may identify an object to which 3D editing is applied (e.g., an object capable of 3D editing) among object(s) included in the first image based on the second artificial intelligence algorithm. For example, the electronic device 101 may identify a person object 721 included in the first image as a target object based on analysis (723) of the first image based on the second artificial intelligence algorithm. The electronic device 101 may identify that the background object 722 included in the first image is not an object to which 3D editing is applied (e.g., an object capable of 3D editing). For example, the electronic device 101 may identify that the background object 722 included in the first image is not an object to which 3D editing is applied (e.g., an object capable of 3D editing) based on the second artificial intelligence algorithm. The electronic device 101 may convert the first image (or an object included in the first image) to 3D in order to enter the editing space. The electronic device 101 may identify first depth information for object(s) included in the first image. For example, the electronic device 101 may identify the first depth information for object(s) included in the first image based on the first artificial intelligence algorithm. As described above, a method of identifying depth information may be the on-device method or the server method.

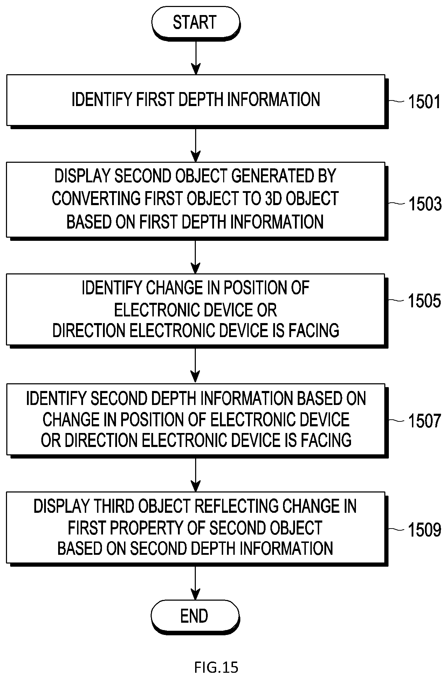

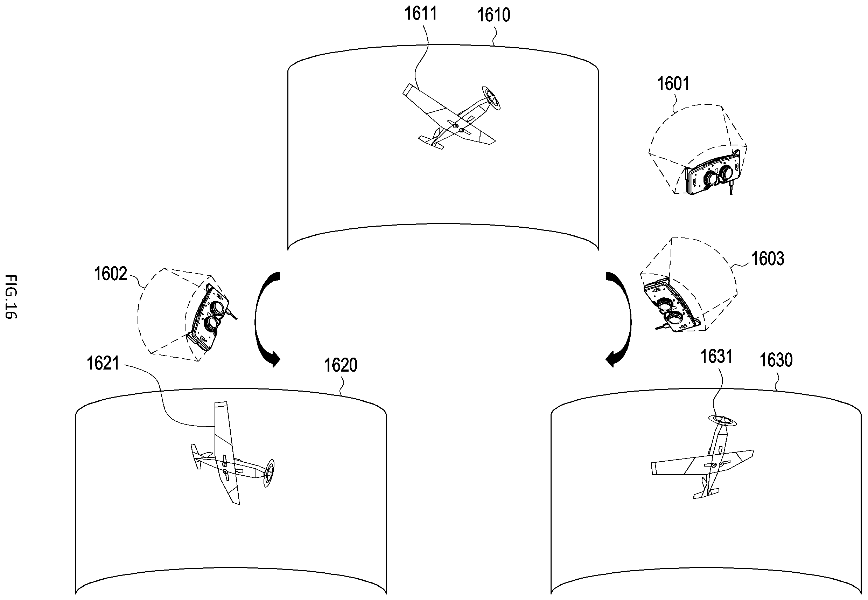

According to an embodiment, 739 of FIG. 7 is a part describing an object converted to a 3D form. The electronic device 101 (e.g., the processor 120) may display a person object 731 obtained by converting the person object 721 of the first image to a 3D object, based on the first depth information for object(s) included in the first image, on the display 414. For example, in the case of the electronic device 101 of FIGS. 2 and 3, the electronic device 101 may display the person object 731 obtained by converting the person object 721 of the first image to a 3D object on the first display 221. In the case of the electronic device 101 of FIGS. 2 and 3, the electronic device 101 may display an object corresponding to the person object 731 obtained by converting the person object 721 of the first image to a 3D object on the second display 230. According to an embodiment, when entry into the first mode (e.g., a VR mode) is requested, in 739 of FIG. 7, 732 may be a background image corresponding to the background object 722 of the first image based on the first depth information. According to an embodiment, when entry into the second mode (e.g., an AR mode) is requested, in 739 of FIG. 7, 732 may be a surrounding space sensed through VST (e.g., an image related to a surrounding environment acquired through the VST camera modules 211, 212). The electronic device 101 may detect a rotation 733 after the 3D person object 731 is displayed. Detection of the rotation 733 may be detection of a user input for rotating an object (e.g., 731). Detection of the rotation 733 may be detection of a change in FOV. For example, the electronic device 101 may detect a change in FOV by detecting a change in a position of the electronic device 101 or a direction in which the electronic device 101 faces. 733 may be described in detail with reference to FIGS. 15 and 16.

According to an embodiment, 740 of FIG. 7 is a part describing identification of new depth information. The electronic device 101 (e.g., the processor 120) may identify second depth information based on the rotation 733 (e.g., rotation of an object or a change in a position of the electronic device 101 or a direction in which the electronic device 101 faces) based on the first artificial intelligence algorithm, based on detecting the rotation 733. A method of applying the first artificial intelligence algorithm may be the on-device method or the server method. The electronic device 101 may display a person object 741 reflecting a change in a property of the person object 731 (e.g., a change in a direction of viewing an object or a change in the form of an object as a direction of viewing an object changes), based on the second depth information. For example, the electronic device 101 may display the person object 731 based on the first depth information in a first direction in 739, and then identify the second depth information in a second direction in 740 and display the person object 741 based on the second depth information. For example, in the case of the electronic device 101 of FIGS. 2 and 3, the electronic device 101 may display the person object 741 on the first display 221. In the case of the electronic device 101 of FIGS. 2 and 3, the electronic device 101 may display an object corresponding to the person object 741 on the second display 230. The electronic device 101 may display the person object 741 together with 742 (e.g., a background image in the case of the first mode, or a surrounding environment in the case of the second mode). When 742 is a background image, 742 may be an image based on the second depth information.

According to an embodiment, the electronic device 101 may store the previously identified first depth information in the memory 130 (e.g., a buffer), based on displaying the person object 741 based on the second depth information. Thereafter, if display of an object in the first direction is requested, the electronic device 101 may display the person object 731 based on the first depth information stored in the memory 130.

According to an embodiment, in 740, the electronic device 101 may identify selection 743 of an object based on a user input. Selection of an object (e.g., 743) may be selection of a target object (e.g., 741) or selection of a part (e.g., a sub object (e.g., a nose) included in the target object (e.g., a person)) of the target object (e.g., 741).

According to an embodiment, 750 of FIG. 7 is a part describing selection of an object to be edited. The electronic device 101 (e.g., the processor 120) may identify a part 753 to be edited in the target object 751 based on selection of an object (e.g., 743). For example, the electronic device 101 may display a mark indicating the part 753 to be edited. As in 740, in 750, 752 may be a background image in the case of the first mode or a surrounding environment in the case of the second mode. The electronic device 101 may identify a user input for editing 754 the part 753 to be edited in the target object 751.

According to an embodiment, 760 of FIG. 7 is a part describing a change in a property of an object by editing. The electronic device 101 (e.g., the processor 120) may change a property of a target object 761 (or a part 763 of the target object 761) based on a user input for editing (e.g., 754). For example, in 760, the electronic device 101 may raise a nose 763 of a person object 761 based on a user input for editing (e.g., 754). The electronic device 101 may display an object reflecting the change in the property on the display 414. For example, in the case of the electronic device 101 of FIGS. 2 and 3, the electronic device 101 may display an object reflecting the change in the property on the first display 221. In the case of the electronic device 101 of FIGS. 2 and 3, the electronic device 101 may display an object corresponding to the object reflecting the change in the property on the second display 230. As in 740, in 760, 762 may be a background image in the case of the first mode or a surrounding environment in the case of the second mode. The electronic device 101 may identify an event for causing an end (764) of editing after displaying the target object 761 with a changed property.

According to an embodiment, 770 of FIG. 7 is a part describing generation of a 2D image reflecting a result of editing. The electronic device 101 (e.g., the processor 120) may generate a second image reflecting a result of editing based on the event for causing the end (e.g., 764) of editing. The second image in 770 may include a person object 771 reflecting a change in a property (e.g., a raised nose) of the person object 711 included in the first image in 710. The second image of 770 may include a background object 727 corresponding to the background object 712 of the first image of 710. According to an embodiment, the second image generated in 770 may be an image corresponding to a direction of viewing the target object 761 at a time when the end (e.g., 764) of editing is identified. For example, the second image generated in 770 may be an image corresponding to FOV at a time of identifying the end (e.g., 764) of editing. According to an embodiment, the second image generated in 770 may be an image reflecting a result of editing in the 3D editing space but corresponding to a direction of the first image of 710.

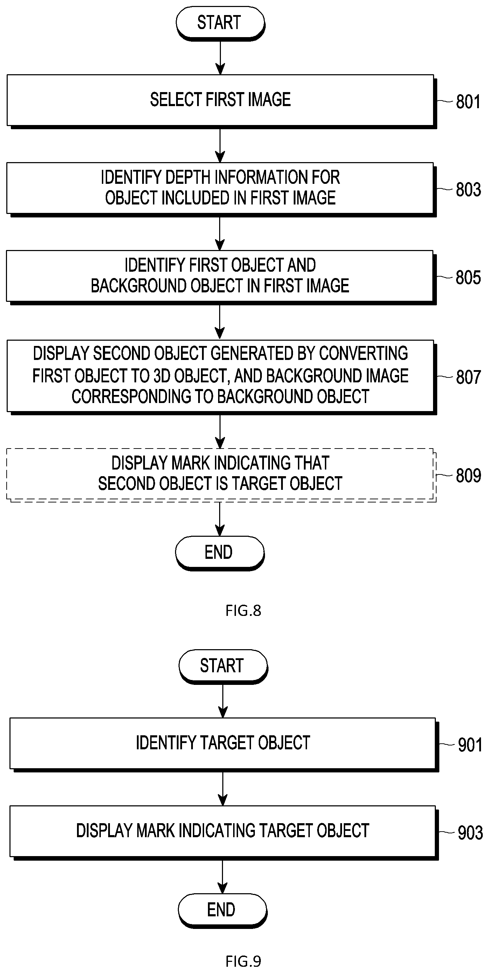

FIG. 8 is a flowchart illustrating a method for operating an electronic device 101 displaying a 3D object, according to an embodiment. FIG. 8 may be described with reference to the previously described embodiments and the embodiments described below (e.g., FIGS. 9 and 10). FIG. 9 is a flowchart illustrating a method for operating an electronic device displaying a mark indicating a target object, according to an embodiment. FIG. 10 is a view illustrating a view point for editing, according to an embodiment.

Display of a 3D object and a background image may be described with reference to FIG. 8.

At least some of the operations of FIG. 8 may be omitted. The operation order of the operations of FIG. 8 may be changed. Operations other than the operations of FIG. 8 may be performed before, while, or after performing the operations of FIG. 8.

Referring to FIG. 8, in operation 801, according to an embodiment, the electronic device 101 (e.g., the processor 120) may select a first image. Operation 801 may be understood with reference to operation 601 of FIG. 6. An overlapping description is omitted. For example, the electronic device 101 may select a first image based on a first user input for selecting the first image. For example, referring to FIG. 10, the electronic device 101 may select an image 1010 including a landscape object 1012 (e.g., a mountain), an object 1011 (e.g., an airplane), and a background object 1013 (e.g., a sky).

In operation 803, according to an embodiment, the electronic device 101 (e.g., the processor 120) may identify depth information for objects (e.g., 1011, 1012, 1013 of FIG. 10) included in the first image. For example, the electronic device 101 (e.g., the processor 120) may identify depth information for objects (e.g., 1011, 1012, 1013 of FIG. 10) included in the first image based on the first artificial intelligence algorithm. As described above, a method of identifying depth information may be the on-device method or the server method.

In operation 805, according to an embodiment, the electronic device 101 (e.g., the processor 120) may identify a first object (e.g., 1011 and/or 1012 of FIG. 10) and a background object (e.g., 1013 of FIG. 10) in the first image based on the identified depth information. Operation 805 may be understood with reference to operation 603 of FIG. 6. An overlapping description is omitted. For example, as described above, a "background object" may be an object that does not satisfy a specified criterion (e.g., a criterion related to depth, size, or focus) among object(s) included in the first image. For example, referring to FIG. 10, the electronic device 101 may identify an object 1013 that does not satisfy a specified criterion (e.g., a criterion related to depth, size, or focus) among objects 1011, 1012, 1013 included in the first image as a background object. For example, referring to FIG. 10, the electronic device 101 may identify a landscape object 1012 (e.g., a mountain) and an object 1011 (e.g., an airplane) as objects that are not background objects (e.g., objects that satisfy a specified criterion (e.g., a criterion related to depth, size, or focus)) among objects 1011, 1012, 1013 included in the first image.

In operation 807, according to an embodiment, the electronic device 101 (e.g., the processor 120) may display a second object (e.g., 1021 and/or 1022 of FIG. 10, or 1031 and/or 1032 of FIG. 10) obtained by converting the first object (e.g., 1011 and/or 1012 of FIG. 10) to a 3D object and a background image (e.g., 1023 of FIG. 10, or the background image of 1030 of FIG. 10) corresponding to the background object (e.g., 1013 of FIG. 10) on the display 414. For example, in the case of the electronic device 101 of FIGS. 2 and 3, the electronic device 101 may display a second object (e.g., 1021 and/or 1022 of FIG. 10, or 1031 and/or 1032 of FIG. 10) obtained by converting the first object (e.g., 1011 and/or 1012 of FIG. 10) to a 3D object and a background image (e.g., 1023 of FIG. 10, or the background image of 1030 of FIG. 10) corresponding to the background object (e.g., 1013 of FIG. 10) on the first display 221. In the case of the electronic device 101 of FIGS. 2 and 3, the electronic device 101 may display an object corresponding to the second object (e.g., 1021 and/or 1022 of FIG. 10, or 1031 and/or 1032 of FIG. 10) and an image corresponding to the background image (e.g., 1023 of FIG. 10, or the background image of 1030 of FIG. 10) on the second display 230. As described above, displaying the second object (e.g., 1021 and/or 1022 of FIG. 10, or 1031 and/or 1032 of FIG. 10) and the background image (e.g., 1023 of FIG. 10, or the background image of 1030 of FIG. 10) may be represented as displaying an editing space.

With respect to operation 807, a view point for editing may be described with reference to FIG. 10. For example, 1020 of FIG. 10 may be an omniscient view point. For example, 1030 of FIG. 10 may be a first-person view point. The "omniscient view point" may be a view point of looking down at an editing space (e.g., 1020 of FIG. 10) generated based on the 2D image (e.g., 1010 of FIG. 10), as in 1020 of FIG. 10. The "first-person view point" may be a view point as if a user is inside an editing space (e.g., 1030 of FIG. 10) generated based on the 2D image (e.g., 1010 of FIG. 10), as in 1030 of FIG. 10. For example, in FIG. 10, the omniscient view point may be a view point of looking down at a model including a mountain and an airplane, as in 1020 of FIG. 10. For example, in FIG. 10, the first-person view point may be a view point of tracking a mountain and viewing an airplane, as in 1030 of FIG. 10. The electronic device 101 may switch between displaying an editing space of the omniscient view point and an editing space of the first-person view point. For example, in FIG. 10, the electronic device 101 may display the editing space 1020 of the omniscient view point, and switch the editing space 1020 of the omniscient view point to the editing space 1030 of the first-person view point based on a user input for causing a change in view point (e.g., a user input for selecting a switching icon 1024). For example, in FIG. 10, the electronic device 101 may display the editing space 1030 of the first-person view point, and switch the editing space 1030 of the first-person view point to the editing space 1020 of the omniscient view point based on a user input for causing a change in view point. For example, the electronic device 101 may display the second object (e.g., 1021 and/or 1022 of FIG. 10) and the background image (e.g., 1023 of FIG. 10) from a first view point (e.g., the omniscient view point) based on the first depth information in operation 807. Thereafter, the electronic device 101 may identify a user input for causing a change in view point. The electronic device 101 may identify second depth information related to a second view point (e.g., the first-person view point) based on the user input for causing the change in view point. For example, the electronic device 101 may identify second depth information related to a second view point (e.g., the first-person view point) based on the first artificial intelligence algorithm, based on the user input for causing the change in view point. The electronic device 101 may display a third object (e.g., 1031 and/or 1032 of FIG. 10) corresponding to the second object (e.g., 1021 and/or 1022 of FIG. 10) and the background image (e.g., the background image of 1030 of FIG. 10) from the second view point (e.g., the first-person view point), based on the second depth information. In this case, the electronic device 101 may store the first depth information in the memory 130 based on identifying the second depth information. The electronic device 101 may display the second object (e.g., 1021 and/or 1022 of FIG. 10) and the background image (e.g., 1023 of FIG. 10) from the first view point (e.g., the omniscient view point) based on the first depth information stored in the memory 130, based on a change from the second view point (e.g., the first-person view point) to the first view point (e.g., the omniscient view point) (e.g., a user input for causing a change in view point). With respect to an embodiment of switching a view point, an embodiment of switching from the second view point (e.g., the first-person view point) to the first view point (e.g., the omniscient view point) may be similarly understood.

In operation 809, according to an embodiment, the electronic device 101 (e.g., the processor 120) may display a mark indicating that the second object generated by converting the first object to a 3D object is a target object. For example, in FIG. 10, the electronic device 101 may display a mark 1034 indicating that the second object (e.g., the airplane 1031 of 1030 of FIG. 10) is a target object. In FIG. 10, the mark 1034 is implemented in the form of a dashed line surrounding the target object (e.g., the airplane 1031), but this is merely an example, and the form of the mark is not limited. Operation 809 may be omitted. With respect to operation 809, this is described in detail with reference to FIG. 9.

At least some of the operations of FIG. 9 may be omitted. The operation order of the operations of FIG. 9 may be changed. Operations other than the operations of FIG. 9 may be performed before, while, or after performing the operations of FIG. 9.

Referring to FIG. 9, in operation 901, according to an embodiment, the electronic device 101 (e.g., the processor 120) may identify a target object. For example, the electronic device 101 may identify a target object among objects (e.g., the landscape object 1012 (e.g., a mountain), the object 1011 (e.g., an airplane), and the background object 1013 (e.g., a sky)) included in the image 1010 of FIG. 10. For example, the electronic device 101 may identify the object 1011 (e.g., an airplane) of FIG. 10 as a target object based on identifying that the object 1011 (e.g., an airplane) is an object to which 3D editing is applied (e.g., an object capable of 3D editing) based on the second artificial intelligence algorithm. Similarly, the electronic device 101 may also identify the landscape object 1012 (e.g., a mountain) of FIG. 10 as a target object based on identifying that the landscape object 1012 (e.g., a mountain) is an object to which 3D editing is applied (e.g., an object capable of 3D editing) based on the second artificial intelligence algorithm. As described above, a method of identifying a target object may be the on-device method or the server method.

In operation 903, according to an embodiment, the electronic device 101 (e.g., the processor 120) may display a mark indicating a target object. For example, FIG. 10 illustrates a case in which the object 1011 (e.g., an airplane) is identified as a target object. In this case, the electronic device 101 may display a mark (e.g., 1034) (e.g., a form of a dashed line surrounding the target object 1021 or 1031) indicating that the object 1021 or 1031 obtained by converting the object 1011 (e.g., an airplane) included in the 2D image 1010 to a 3D object is a target object.

Thereafter, according to an embodiment, the electronic device 101 may edit a target object based on a user input and generate a 2D image (e.g., 1040 of FIG. 10) reflecting editing of the target object based on an end of editing, as in operation 611, operation 613, and operation 615 of FIG. 6. The 2D image 1040 generated in FIG. 10 may include a landscape object (e.g., 1042 corresponding to 1012) (e.g., a mountain) and a background object (e.g., 1043 corresponding to 1013) (e.g., a sky) included in the existing image 1010, and an object 1041 reflecting a change in a property (e.g., size, position, form, type) of the object 1011 (e.g., an airplane) included in the existing image 1010.

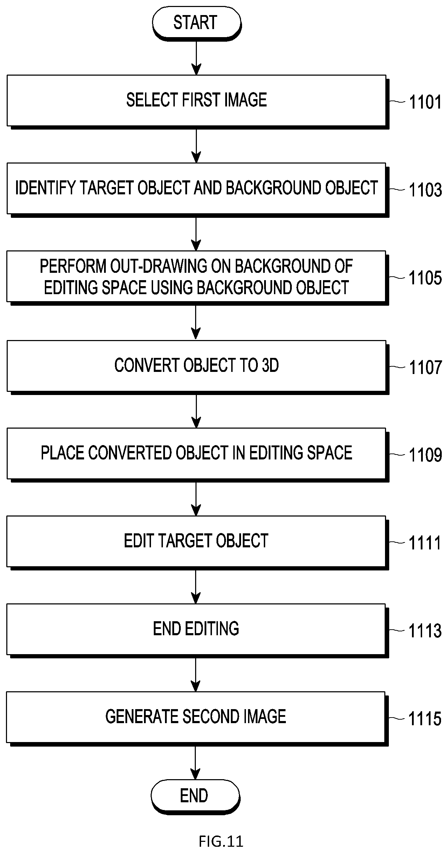

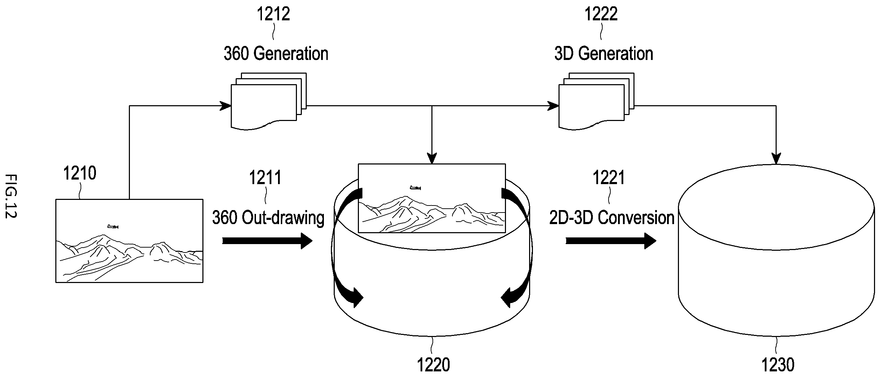

FIG. 11 is a flowchart illustrating a method for operating an electronic device displaying a background of an editing space, according to an embodiment. FIG. 11 may be described with reference to the previously described embodiments and the embodiments described below (e.g., FIG. 12). FIG. 12 is a view illustrating an editing space, according to an embodiment.

The first mode (e.g., a full immersive mode) (e.g., a VR mode) and out-drawing may be described with reference to FIGS. 11 and 12.

At least some operations of FIG. 11 may be omitted. The operation order of the operations of FIG. 11 may be changed. Operations other than the operations of FIG. 11 may be performed before, while, or after performing the operations of FIG. 11.

Referring to FIG. 11, in operation 1101, according to an embodiment, the electronic device 101 (e.g., the processor 120) may select a first image. Operation 1101 may be understood with reference to operation 601 of FIG. 6. An overlapping description is omitted. For example, the electronic device 101 may select a first image based on a first user input for selecting the first image. For example, referring to FIG. 12, the electronic device 101 may select an image 1210 including a landscape object (e.g., a mountain), an object (e.g., an airplane), and a background object (e.g., a sky).

In operation 1103, according to an embodiment, the electronic device 101 (e.g., the processor 120) may identify a target object and a background object among objects included in the first image (e.g., the image 1210). Operation 1103 may be understood with reference to operations 603 and 605 of FIG. 6 and operations 803 and 805 of FIG. 8. An overlapping description is omitted. The electronic device 101 may identify depth information for the first image (e.g., object(s) included in the first image). For example, the electronic device 101 may identify depth information for the first image (e.g., object(s) included in the first image) based on the first artificial intelligence algorithm. As described above, a method of identifying depth information may be the on-device method or the server method. The electronic device 101 may identify an object that does not satisfy a specified criterion (e.g., a criterion related to depth, size, or focus) as a background object and identify an object that satisfies a specified criterion (e.g., a criterion related to depth, size, or focus) as a candidate object, based on the depth information. For example, the electronic device 101 may identify a first object (e.g., the airplane of 1210) as a target object based on identifying that the first object (e.g., the airplane of 1210) among object(s) included in the first image is an object to which 3D editing is applied (e.g., an object capable of 3D editing) based on the second artificial intelligence algorithm.

In operation 1105, according to an embodiment, the electronic device 101 (e.g., the processor 120) may perform out-drawing on a background of an editing space using a background object based on the depth information. For example, the electronic device 101 (e.g., the processor 120) may perform out-drawing on a background of an editing space using a background object based on the depth information based on the first artificial intelligence algorithm. For example, in FIG. 12, the electronic device 101 may perform out-drawing 1211 on a background of an editing space 1220 using a background object (e.g., a sky) included in the 2D image 1210 based on the depth information. Out-drawing may be generating a 360-degree background (e.g., a background image) based on a background object (e.g., a sky) of the 2D image (e.g., 1210). "360 out-drawing 1211" in FIG. 12 may be generating a background (e.g., a background image) surrounding the editing space 1220 by 360 degrees. For example, in FIG. 12, the electronic device 101 may perform out-drawing 1211 on a background of the editing space 1220 using a background object based on an event for causing generation (1212) of a 360-degree editing space.

In operation 1107, according to an embodiment, the electronic device 101 (e.g., the processor 120) may convert an object to 3D based on the depth information. The electronic device 101 (e.g., the processor 120) may convert an object to 3D based on the depth information based on the first artificial intelligence algorithm. Operation 1107 may be understood with reference to operations 607 and 609 of FIG. 6 and operation 807 of FIG. 8. An overlapping description is omitted. For example, in FIG. 12, the electronic device 101 may convert a landscape object (e.g., a mountain) and an object (e.g., an airplane) included in the 2D image to 3D based on the depth information. For example, in FIG. 12, the electronic device 101 may convert (1221) a 2D object to 3D based on the depth information based on the first artificial intelligence algorithm, based on an event for causing generation (1222) of a 3D object.

In operation 1109, according to an embodiment, the electronic device 101 (e.g., the processor 120) may place the object converted to 3D in the editing space (e.g., 1230). In FIG. 12, the editing space 1230 may include the background image of operation 1105. For example, the object converted to 3D in operation 1107 may be displayed on the display 414 together with the background image by out-drawing of operation 1105 by operation 1109.

In operation 1111, according to an embodiment, the electronic device 101 (e.g., the processor 120) may edit a target object based on a user input. Operation 1111 may be understood with reference to operation 611 of FIG. 6. An overlapping description is omitted. For example, the electronic device 101 may display an object reflecting a change in a property by editing on the display 414.

In operation 1113, according to an embodiment, the electronic device 101 (e.g., the processor 120) may end editing based on an event for causing an end of editing. Operation 1113 may be understood with reference to operation 613 of FIG. 6. An overlapping description is omitted.

In operation 1115, according to an embodiment, the electronic device 101 (e.g., the processor 120) may generate a 2D second image reflecting a result of editing based on the end of editing. Operation 1115 may be understood with reference to operation 615 of FIG. 6. An overlapping description is omitted.

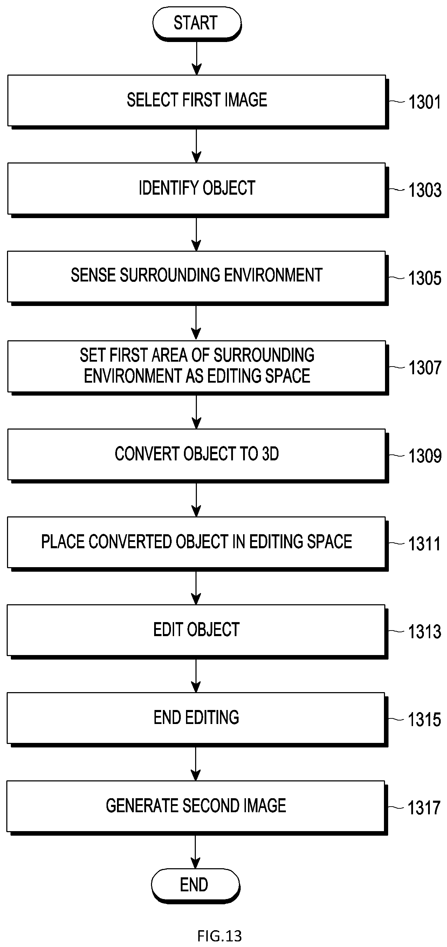

FIG. 13 is a flowchart illustrating a method for operating an electronic device sensing a surrounding environment and setting a partial area of the surrounding environment as an editing space, according to an embodiment. FIG. 13 may be described with reference to the previously described embodiments and the embodiments described below (e.g., FIG. 14). FIG. 14 is a view illustrating a mode change, according to an embodiment.

The second mode (e.g., a half immersive mode) (e.g., an AR mode) and a mode change may be described with reference to FIGS. 13 and 14.

At least some operations of FIG. 13 may be omitted. The operation order of the operations of FIG. 13 may be changed. Operations other than the operations of FIG. 13 may be performed before, while, or after performing the operations of FIG. 13.

Referring to FIG. 13, in operation 1301, according to an embodiment, the electronic device 101 (e.g., the processor 120) may select a first image. Operation 1301 may be understood with reference to operation 601 of FIG. 6. An overlapping description is omitted. For example, the electronic device 101 may select a first image based on a first user input for selecting the first image. For example, referring to FIG. 14, the electronic device 101 may select an image 1410 including a landscape object (e.g., a mountain), an object 1411 (e.g., an airplane), and a background object (e.g., a sky).

In operation 1303, according to an embodiment, the electronic device 101 (e.g., the processor 120) may identify an object included in the first image. Operation 1103 may be understood with reference to operations 603 and 605 of FIG. 6 and operations 803 and 805 of FIG. 8. An overlapping description is omitted. For example, the electronic device 101 may identify depth information for the first image (e.g., object(s) included in the first image). As described above, a method of identifying depth information may be the on-device method or the server method. The electronic device 101 may identify an object that does not satisfy a specified criterion (e.g., a criterion related to depth, size, or focus) as a background object and identify an object that satisfies a specified criterion (e.g., a criterion related to depth, size, or focus) as a candidate object, based on the depth information. For example, the electronic device 101 may identify a first object (e.g., the airplane 1411 of 1410) as a target object based on identifying that the first object (e.g., the airplane 1411 of 1410) among object(s) included in the first image is an object to which 3D editing is applied (e.g., an object capable of 3D editing) based on the second artificial intelligence algorithm. For example, in FIG. 14, the electronic device 101 may identify a landscape object (e.g., a mountain), an object 1411 (e.g., an airplane), and a background object (e.g., a sky) included in the image 1410. For example, in FIG. 14, the electronic device 101 may identify the object 1411 (e.g., an airplane) as a target object.

In operation 1305, according to an embodiment, the electronic device 101 (e.g., the processor 120) may sense a surrounding environment. For example, referring to FIG. 14, the electronic device 101 may sense a surrounding environment 1420 through VST. For example, the electronic device 101 may display a surrounding environment sensed through VST (e.g., an image (e.g., 1430) related to a surrounding environment acquired through the VST camera modules 211, 212) on the display 414. Although 1430 of FIG. 14 is illustrated as if it is an empty space, this is for convenience of description, and 1430 may be a surrounding environment (or an image related to a surrounding environment) displayed on the display 414.

In operation 1307, according to an embodiment, the electronic device 101 (e.g., the processor 120) may set a partial area (e.g., a first area) of the surrounding environment as an editing space. A 3D object described below may be placed in the editing space set in the partial area of the surrounding environment.

In operation 1309, according to an embodiment, the electronic device 101 (e.g., the processor 120) may convert the target object (e.g., 1411 of FIG. 14) to 3D based on the depth information. The electronic device 101 (e.g., the processor 120) may convert the target object (e.g., 1411 of FIG. 14) to 3D based on the depth information based on the first artificial intelligence algorithm. Operation 1309 may be understood with reference to operations 607 and 609 of FIG. 6 and operation 807 of FIG. 8. An overlapping description is omitted.

In operation 1311, according to an embodiment, the electronic device 101 (e.g., the processor 120) may place the object converted to 3D in the editing space. For example, in FIG. 14, the electronic device 101 may place the target object 1431 converted to 3D in operation 1309 in the editing space set in the partial area of the surrounding environment 1430.

According to an embodiment, referring to FIG. 14, the electronic device 101 may switch modes. 1430 of FIG. 14 may be an editing space of the second mode (e.g., a half immersive mode) (e.g., an AR mode). 1440 of FIG. 14 may be an editing space of the first mode (e.g., a full immersive mode) (e.g., a VR mode). 1440 may include an object 1441 converted to 3D. The electronic device 101 may switch between displaying 1430 and 1440. For example, in FIG. 14, the electronic device 101 may display the editing space 1430 of the second mode (e.g., a half immersive mode) (e.g., an AR mode), and switch the editing space 1430 of the second mode (e.g., a half immersive mode) (e.g., an AR mode) to the editing space 1440 of the first mode (e.g., a full immersive mode) (e.g., a VR mode) based on a user input for causing a mode change. An operation of displaying the editing space 1440 of the first mode (e.g., a full immersive mode) (e.g., a VR mode) may be understood with reference to FIG. 11. For example, in FIG. 14, the electronic device 101 may display the editing space 1440 of the first mode (e.g., a full immersive mode) (e.g., a VR mode), and switch the editing space 1440 of the first mode (e.g., a full immersive mode) (e.g., a VR mode) to the editing space 1430 of the second mode (e.g., a half immersive mode) (e.g., an AR mode) based on a user input for causing a mode change.

In operation 1313, according to an embodiment, the electronic device 101 (e.g., the processor 120) may edit an object based on a user input. Operation 1313 may be understood with reference to operation 611 of FIG. 6. An overlapping description is omitted. For example, the electronic device 101 may display an object reflecting a change in a property by editing on the display 414.

In operation 1315, according to an embodiment, the electronic device 101 (e.g., the processor 120) may end editing based on an event for causing an end of editing. Operation 1315 may be understood with reference to operation 613 of FIG. 6. An overlapping description is omitted.

In operation 1317, according to an embodiment, the electronic device 101 (e.g., the processor 120) may generate a 2D second image reflecting a result of editing based on the end of editing. Operation 1317 may be understood with reference to operation 615 of FIG. 6. An overlapping description is omitted.

FIG. 15 is a flowchart illustrating a method for operating an electronic device identifying depth information based on field of view (FOV), according to an embodiment. FIG. 15 may be described with reference to the previously described embodiments and the embodiments described below (e.g., FIG. 16). FIG. 16 is a view illustrating a change in FOV, according to an embodiment.

An operation of identifying new depth information based on a change in FOV may be described with reference to FIGS. 15 and 16. FIG. 16 is a view illustrating by way of example an embodiment of an editing space of the second mode (e.g., a half immersive mode) (e.g., an AR mode). The description of FIG. 16 may also be applied to an embodiment of an editing space of the first mode (e.g., a full immersive mode) (e.g., a VR mode).

At least some operations of FIG. 15 may be omitted. The operation order of the operations of FIG. 15 may be changed. Operations other than the operations of FIG. 15 may be performed before, while, or after performing the operations of FIG. 15 are performed.

Referring to FIG. 15, in operation 1501, according to an embodiment, the electronic device 101 (e.g., the processor 120) may identify first depth information. The electronic device 101 (e.g., the processor 120) may identify the first depth information based on the first artificial intelligence algorithm. Operation 1501 may be understood with reference to operation 601 of FIG. 6 and operations 801 and 803 of FIG. 8. An overlapping description is omitted. For example, the electronic device 101 may select a first image and identify first depth information for the first image (or object(s) included in the first image) based on the first artificial intelligence algorithm. As described above, a method of identifying depth information may be the on-device method or the server method. Referring to FIG. 16, the first depth information of operation 1501 may correspond to a first FOV 1601. For example, in FIG. 16, the first depth information in a first direction may be identified based on the first FOV 1601 formed by a position of the electronic device 101 or a direction in which the electronic device 101 faces.

In operation 1503, according to an embodiment, the electronic device 101 (e.g., the processor 120) may display a second object (e.g., 1601 of FIG. 16) obtained by converting a first object (e.g., an airplane) included in the 2D image to a 3D object, based on the first depth information, on the display 414. Operation 1503 may be understood with reference to operations 607 and 609 of FIG. 6 and operation 807 of FIG. 8. An overlapping description is omitted. For example, in the second mode (e.g., a half immersive mode) (e.g., an AR mode), the electronic device 101 may display a first surrounding environment (e.g., an image related to the first surrounding environment) corresponding to the first FOV (e.g., 1601 of FIG. 16) sensed through VST on the display 414, set a partial area of the first surrounding environment (e.g., an image related to the first surrounding environment) as an editing space 1610, and display a second object (e.g., 1611 of FIG. 16) obtained based on the first depth information in the set editing space 1610. For example, in the first mode (e.g., a full immersive mode) (e.g., a VR mode), the electronic device 101 may display a first background image corresponding to the first FOV (e.g., 1601 of FIG. 16), and display a second object (e.g., 1611 of FIG. 16) obtained based on the first depth information together with the first background image.

In operation 1505, according to an embodiment, the electronic device 101 (e.g., the processor 120) may identify a change in a position of the electronic device 101 or a direction in which the electronic device 101 faces. The electronic device 101 may identify a change in FOV by identifying a change in a position of the electronic device 101 or a direction in which the electronic device 101 faces. For example, in FIG. 16, the electronic device 101 may identify that the FOV changes from the first FOV 1601 to a second FOV 1602, or identify that the FOV changes from the first FOV 1601 to a third FOV 1603. A change in a position of the electronic device 101 or a direction in which the electronic device 101 faces may occur, e.g., when a user wearing the electronic device 101 moves or turns a head.

In operation 1507, according to an embodiment, the electronic device 101 (e.g., the processor 120) may identify second depth information based on the change in the position of the electronic device 101 or the direction in which the electronic device 101 faces. When the position of the electronic device 101 or the direction in which the electronic device 101 faces changes, the second depth information may be identified based on the first artificial intelligence algorithm reflecting the change in FOV as the FOV changes. For example, in the case of the on-device method, the electronic device 101 may identify the second depth information reflecting the change in the position of the electronic device 101 or the direction in which the electronic device 101 faces based on the first artificial intelligence algorithm included in the electronic device 101. For example, in the case of the server method, the electronic device 101 may transmit information about the change in the position of the electronic device 101 or the direction in which the electronic device 101 faces to the server 400. The server 400 may identify the second depth information reflecting the change in the position of the electronic device 101 or the direction in which the electronic device 101 faces based on the first artificial intelligence algorithm included in the server 400. The server 400 may transmit the second depth information to the electronic device 101. The electronic device 101 may receive the second depth information from the server 400.

In operation 1509, according to an embodiment, the electronic device 101 (e.g., the processor 120) may display a third object (e.g., 1621 or 1631 of FIG. 16) reflecting a change in a first property (e.g., a direction of viewing) of the second object (e.g., 1611 of FIG. 16), based on the second depth information, on the display 414. For example, in the second mode (e.g., a half immersive mode) (e.g., an AR mode), the electronic device 101 may display a second surrounding environment (e.g., an image related to the second surrounding environment) corresponding to the second FOV (e.g., 1602 of FIG. 16) sensed through VST on the display 414, set a partial area of the second surrounding environment (e.g., an image related to the second surrounding environment) as an editing space (e.g., 1620), and display a third object (e.g., 1621 of FIG. 16) obtained based on the second depth information in the set editing space (e.g., 1620). The case of the third FOV (e.g., 1603 of FIG. 16) may be similarly understood. For example, in the first mode (e.g., a full immersive mode) (e.g., a VR mode), the electronic device 101 may display a second background image (e.g., 1620) corresponding to the second FOV (e.g., 1602 of FIG. 16), and display a third object (e.g., 1621 of FIG. 16) obtained based on the second depth information together with the second background image. The case of the third FOV (e.g., 1603 of FIG. 16) may be similarly understood.

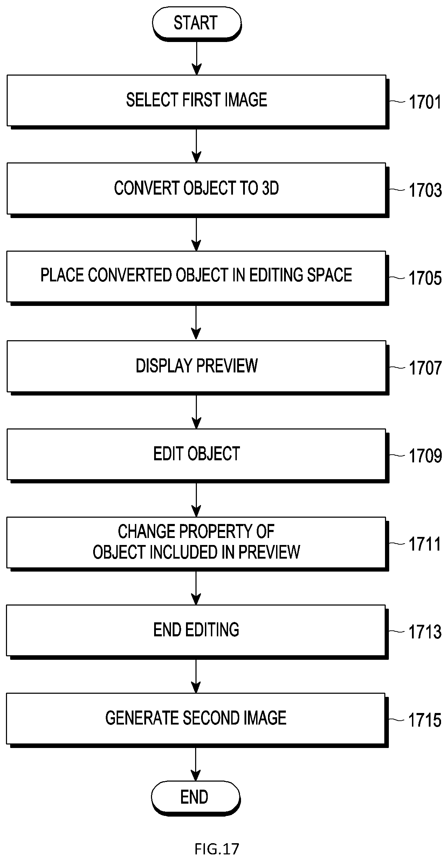

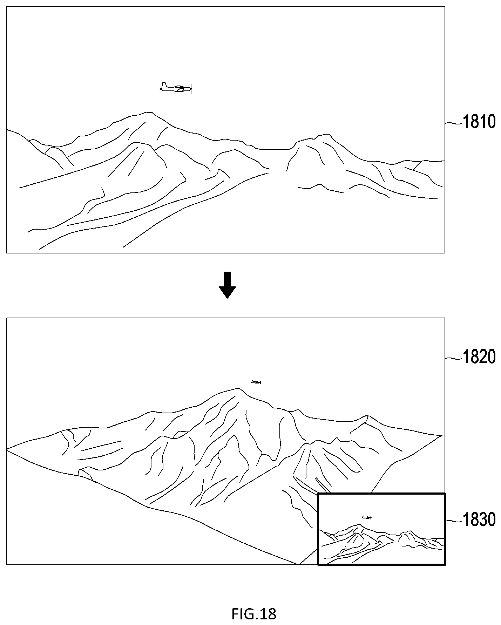

FIG. 17 is a flowchart illustrating a method for operating an electronic device displaying a preview, according to an embodiment. FIG. 17 may be described with reference to the previously described embodiments and the embodiments described below (e.g., FIG. 18). FIG. 18 is a view illustrating a preview, according to an embodiment.

An operation of displaying a preview may be understood with reference to FIGS. 17 and 18.

At least some of the operations of FIG. 17 may be omitted. The operation order of the operations of FIG. 17 may be changed. Operations other than the operations of FIG. 17 may be performed before, while, or after performing the operations of FIG. 17.

Referring to FIG. 17, in operation 1701, according to an embodiment, the electronic device 101 (e.g., the processor 120) may select a first image. Operation 1701 may be understood with reference to operation 601 of FIG. 6. An overlapping description is omitted. For example, the electronic device 101 may select a first image based on a first user input for selecting the first image. For example, referring to FIG. 18, the electronic device 101 may select an image 1810 including a landscape object (e.g., a mountain), an object (e.g., an airplane), and a background object (e.g., a sky).

In operation 1703, according to an embodiment, the electronic device 101 (e.g., the processor 120) may convert an object to 3D based on depth information for the first image (e.g., object(s) included in the first image). For example, the electronic device 101 (e.g., the processor 120) may convert an object to 3D based on the depth information based on the first artificial intelligence algorithm for the first image (e.g., object(s) included in the first image). Operation 1703 may be understood with reference to operations 607 and 609 of FIG. 6 and operation 807 of FIG. 8. An overlapping description is omitted. For example, in FIG. 18, the electronic device 101 may convert a landscape object (e.g., a mountain) and an object (e.g., an airplane) included in the 2D image 1810 to 3D based on the depth information.

In operation 1705, according to an embodiment, the electronic device 101 (e.g., the processor 120) may place the object converted to 3D in the editing space (e.g., 1820). In FIG. 18, the editing space 1820 may include a background image generated by out-drawing using a background object (e.g., a sky) of the first image. For example, the object converted to 3D in operation 1703 may be displayed on the display 414 together with the background image by out-drawing. For example, the editing space of operation 1705 may also be a partial area of a surrounding environment sensed through VST (e.g., an image related to a surrounding environment acquired through the VST camera modules 211, 212).

In operation 1707, according to an embodiment, the electronic device 101 (e.g., the processor 120) may display a preview while displaying the object converted to 3D in the editing space. For example, in FIG. 18, the electronic device 101 may display a preview 1830 in a partial area of the display 414 while displaying the object converted to 3D in the editing space 1820. As described above, the preview (e.g., 1830) may correspond to the 2D image (e.g., the first image of operation 1701 (e.g., 1810 of FIG. 18)). The preview (e.g., 1830) may indicate a result of editing (e.g., operation 1709) or a direction of editing (e.g., operation 1709). When the preview indicates a result of editing, the preview may include an object having a property changed by editing. When the preview indicates a direction of editing, the preview may indicate how editing by a user input is applied. FIG. 18 is a view illustrating by way of example an embodiment of an omniscient view point of the first mode (e.g., a full immersive mode) (e.g., a VR mode). The description of the preview display of FIG. 18 may be similarly applied to an embodiment of a first-person view point of the first mode (e.g., a full immersive mode) (e.g., a VR mode), or an embodiment of the second mode (e.g., a half immersive mode) (e.g., an AR mode).

In operation 1709, according to an embodiment, the electronic device 101 (e.g., the processor 120) may edit an object based on a user input. Operation 1709 may be understood with reference to operation 611 of FIG. 6. An overlapping description is omitted. For example, the electronic device 101 may display an object reflecting a change in a property by editing on the display 414.

In operation 1711, according to an embodiment, the electronic device 101 (e.g., the processor 120) may change a property of an object included in the preview based on editing. The electronic device 101 may display the preview (e.g., 1830) in which a property of an object (e.g., the airplane included in 1830) included in the preview (e.g., 1830) has been changed, based on a change in a property of the object (e.g., the airplane included in 1820). For example, in FIG. 18, based on a change in a property of the object (the airplane included in 1820) included in the editing space 1820, a property of the object (the airplane included in 1830) included in the preview 1830 corresponding to the object (the airplane included in 1820) with the changed property may be changed.

In operation 1713, according to an embodiment, the electronic device 101 (e.g., the processor 120) may end editing based on an event for causing an end of editing. Operation 1713 may be understood with reference to operation 613 of FIG. 6. An overlapping description is omitted.

In operation 1715, according to an embodiment, the electronic device 101 (e.g., the processor 120) may generate a 2D second image reflecting a result of editing based on the end of editing. Operation 1715 may be understood with reference to operation 615 of FIG. 6. An overlapping description is omitted.

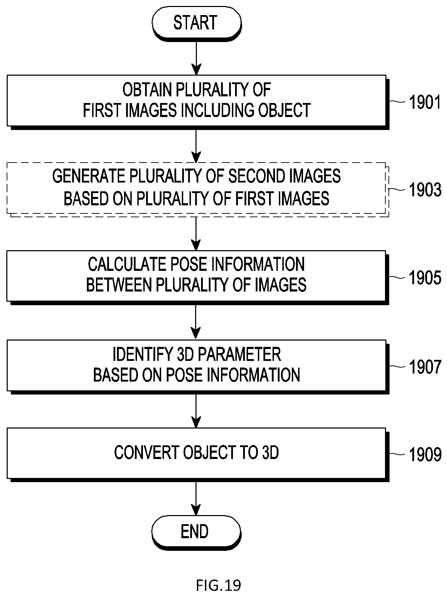

FIG. 19 is a flowchart illustrating a method for operating an electronic device converting an object to 3D based on a plurality of images, according to an embodiment. FIG. 19 may be described with reference to the above described embodiments and embodiments described below.

At least some of the operations of FIG. 19 may be omitted. The operation order of the operations of FIG. 19 may be changed. Operations other than the operations of FIG. 19 may be performed before, while, or after performing the operations of FIG. 19.

An embodiment of converting a person object to 3D may be described with reference to FIG. 19. The description of FIG. 19 may also be similarly applied to an embodiment of converting a landscape object to 3D.

Referring to FIG. 19, in operation 1901, according to an embodiment, the electronic device 101 (e.g., the processor 120) may acquire a plurality of first images including the same object. According to an embodiment, the electronic device 101 may select a first image, identify a first object included in the first image, and acquire a plurality of first images including an object corresponding to the first object from among a plurality of images stored in the memory 130. For example, when an image including a person is selected, the electronic device 101 may acquire other images including the person. According to an embodiment, the electronic device 101 may select a first image, identify a first object included in the first image, and acquire a plurality of first images including an object corresponding to the first object from among a plurality of images stored in the server 400 from the server 400. Operation 1903 may be performed after operation 1901 is performed, or operation 1903 may be omitted if operation 1903 is not necessary.

In operation 1903, according to an embodiment, the electronic device 101 (e.g., the processor 120) may generate a plurality of second images based on the plurality of first images of operation 1901. For example, the electronic device 101 may perform operation 1903 when determining that performing operation 1905 based on the plurality of first images is not appropriate. The electronic device 101 may generate a plurality of second images having different FOVs for the first object based on the plurality of first images including an object corresponding to the first object. For example, after acquiring the plurality of first images including a person, the electronic device 101 may generate a plurality of second images representing viewing the person from a plurality of directions (e.g., a front, a side, a rear, etc. of the person) based on the plurality of first images. According to an embodiment, generation of the second images may be performed in the electronic device 101. According to an embodiment, generation of the second images may be performed through the server 400. For example, the electronic device 101 may transmit information about the plurality of first images to the server 400, and the server 400 may generate a plurality of second images based on the plurality of first images and transmit the plurality of second images to the electronic device 101.

In operation 1905, according to an embodiment, the electronic device 101 (e.g., the processor 120) may calculate posture information between the plurality of images. The plurality of images of operation 1905 may be the plurality of first images of operation 1901 and/or the plurality of second images of operation 1903. For example, using the plurality of images including a person, the electronic device 101 may calculate posture information for a person included in the plurality of images. The posture information may be information indicating what posture a body of a person included in the plurality of images is taking. For example, the posture information may include depth information corresponding to each part of an object.

In operation 1907, according to an embodiment, the electronic device 101 (e.g., the processor 120) may identify a 3D parameter corresponding to an object based on the posture information. The 3D parameter may indicate a position of each part of the object.

In operation 1909, according to an embodiment, the electronic device 101 (e.g., the processor 120) may convert an object to 3D based on the 3D parameter.

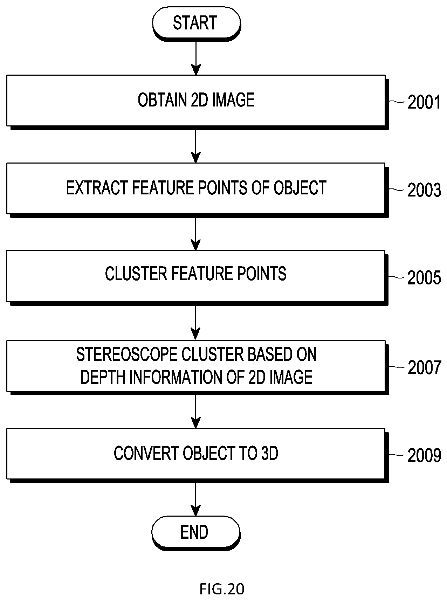

FIG. 20 is a flowchart illustrating a method for operating an electronic device converting an object to 3D by extracting feature points, according to an embodiment. FIG. 20 may be described with reference to the above described embodiments and embodiments described below.

At least some of the operations of FIG. 20 may be omitted. The operation order of the operations of FIG. 20 may be changed. Operations other than the operations of FIG. 20 may be performed before, while, or after performing the operations of FIG. 20.

An embodiment of converting a landscape object to 3D may be described with reference to FIG. 20. The description of FIG. 20 may also be similarly applied to an embodiment of converting a person object to 3D.

Referring to FIG. 20, in operation 2001, according to an embodiment, the electronic device 101 (e.g., the processor 120) may acquire a 2D image.

In operation 2003, according to an embodiment, the electronic device 101 (e.g., the processor 120) may extract feature points of an object included in the acquired 2D image. For example, the electronic device 101 may extract feature points of a landscape object included in the acquired 2D image.

In operation 2005, according to an embodiment, the electronic device 101 (e.g., the processor 120) may cluster the feature points. For example, the electronic device 101 may cluster feature points corresponding to each part of the landscape object.

In operation 2007, according to an embodiment, the electronic device 101 (e.g., the processor 120) may solidify the cluster based on depth information of the 2D image. For example, the electronic device 101 may identify depth information for the 2D image of operation 2001. For example, the electronic device 101 may identify depth information for the 2D image of operation 2001 based on the first artificial intelligence algorithm. The electronic device 101 may solidify the cluster of operation 2005 based on the identified depth information.

In operation 2009, according to an embodiment, the electronic device 101 (e.g., the processor 120) may convert an object to 3D based on operation 2007. For example, the electronic device 101 may convert a landscape object to 3D by clustering feature points corresponding to each part of the landscape object included in the 2D image and solidifying the cluster.

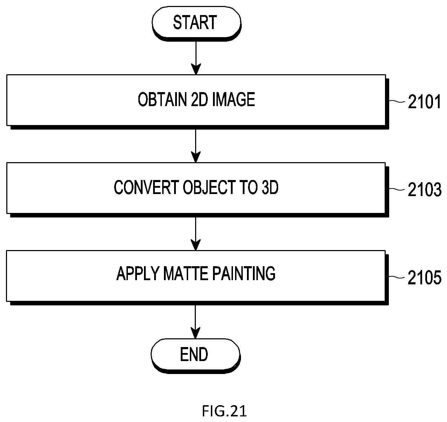

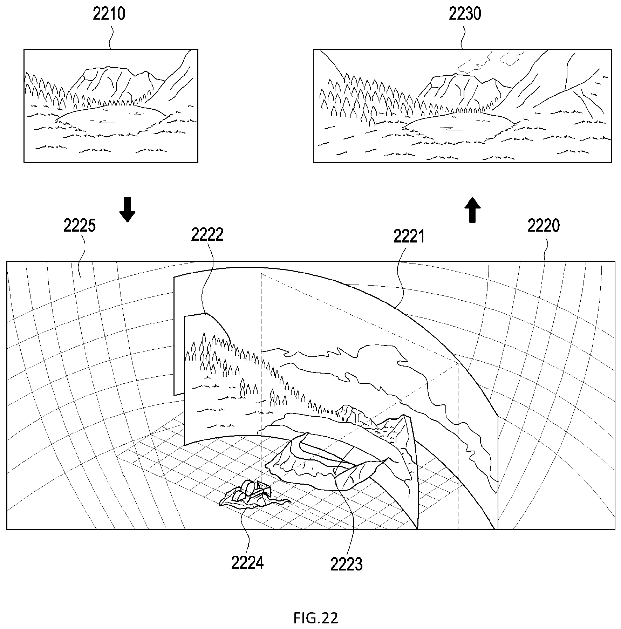

FIG. 21 is a flowchart illustrating a method for operating an electronic device applying matte painting, according to an embodiment. FIG. 21 may be described with reference to the previously described embodiments and the embodiments described below (e.g., FIG. 22). FIG. 22 is a view illustrating an operation of converting an image to 3D, according to an embodiment.

At least some of the operations of FIG. 21 may be omitted. The operation order of the operations of FIG. 21 may be changed. An operation other than the operations of FIG. 21 may be performed before, while, or after performance of the operations of FIG. 20.

Referring to FIG. 21, in operation 2101, according to an embodiment, the electronic device 101 (e.g., the processor 120) may acquire a 2D image. For example, referring to FIG. 22, the electronic device 101 may acquire a 2D image 2210.

In operation 2103, according to an embodiment, the electronic device 101 (e.g., the processor 120) may convert object(s) included in the 2D image to 3D. For example, in FIG. 22, the electronic device 101 may convert object(s) included in the 2D image 2210 to 3D object(s) (e.g., 2221, 2222, 2223, 2224) based on the depth information.

In operation 2105, according to an embodiment, the electronic device 101 (e.g., the processor 120) may apply matte painting to the converted object(s) (e.g., 2221, 2222, 2223, 2224). The electronic device 101 may display a 3D image 2230 to which matte painting has been applied on the display 414.

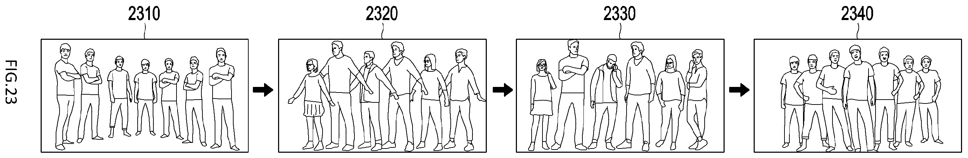

FIG. 23 is a view illustrating editing of an image, according to an embodiment. FIG. 23 may be described with reference to the above described embodiments and embodiments described below.

Editing of an image including a plurality of person objects may be described with reference to FIG. 23.

Referring to FIG. 23, the electronic device 101 (e.g., the processor 120), according to an embodiment, may select a first image 2310. The first image 2310 may include a plurality of person objects. The electronic device 101 may start editing the first image 2310 based on a user input. The electronic device 101 may identify depth information for the first image 2310 (e.g., the plurality of person objects included in the first image 2310). For example, the electronic device 101 may identify depth information for the first image 2310 (e.g., the plurality of person objects included in the first image 2310) based on the first artificial intelligence algorithm. The electronic device 101 may convert (2320) the first image 2310 (e.g., the plurality of person objects included in the first image 2310) to 3D based on the depth information. The electronic device 101 may change (2330) a property of at least some of the plurality of person objects converted to 3D based on a user input for directly editing an object or a user input for selecting a preset described below. The electronic device 101 may generate a 2D image 2340 reflecting a result of editing based on a user input for causing an end of editing. For example, referring to FIG. 23, the electronic device 101 may change an expression or a posture of some persons by editing a wedding photo including a plurality of person objects.

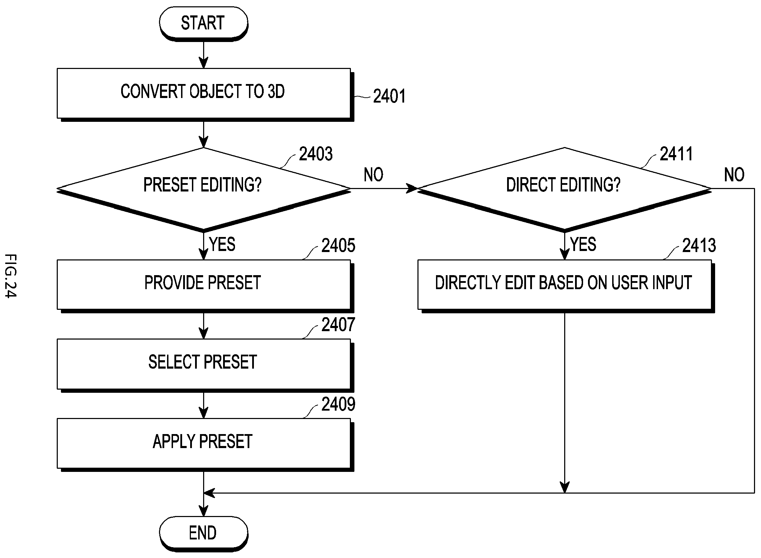

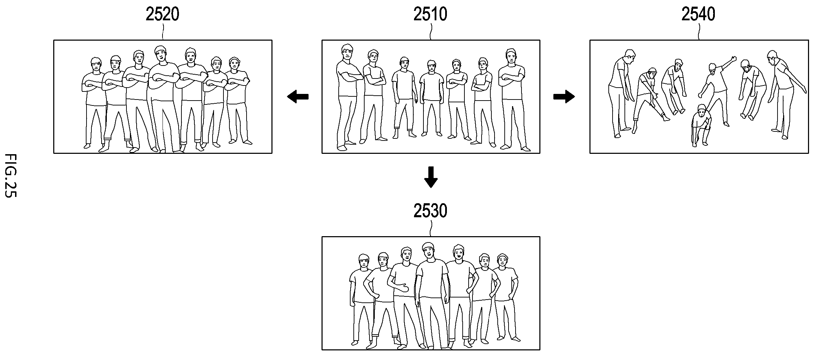

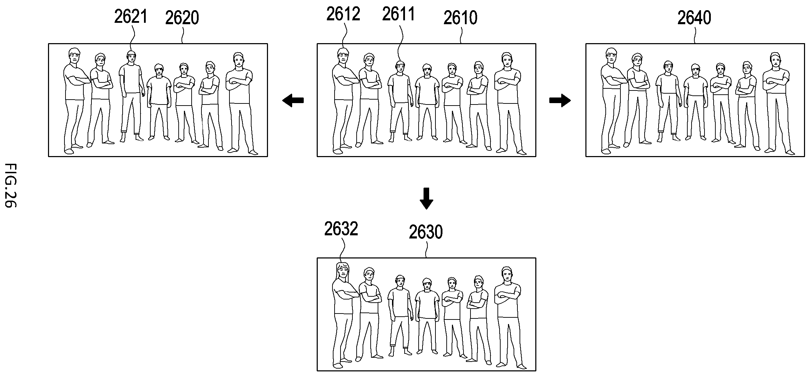

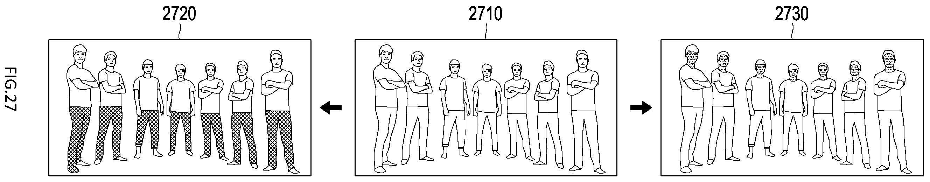

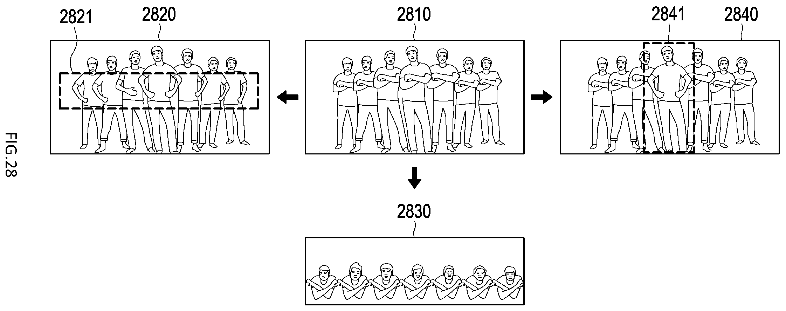

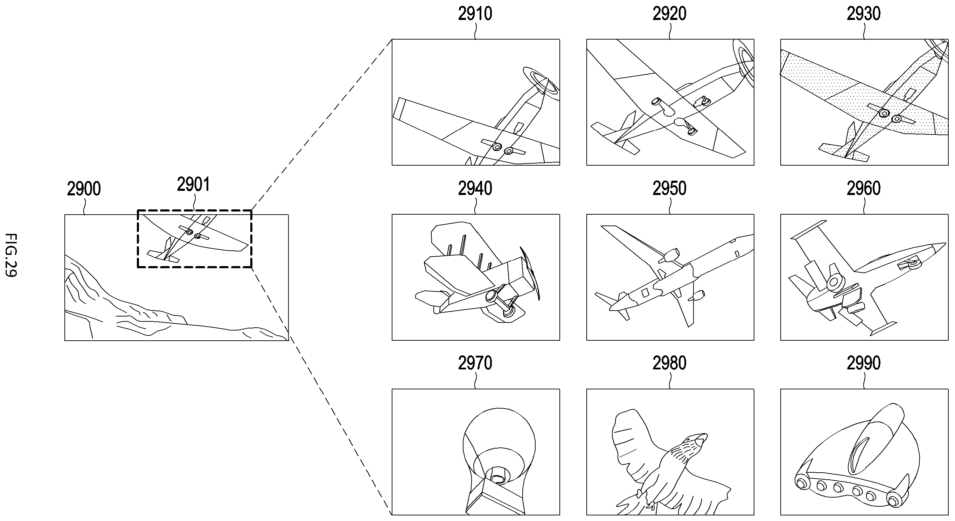

FIG. 24 is a flowchart illustrating a method for operating an electronic device providing a preset, according to an embodiment. FIG. 24 may be described with reference to the previously described embodiments and the embodiments described below (e.g., FIGS. 25, 26, 27, 28, and 29). FIG. 25 is a view illustrating editing of an image, according to an embodiment. FIG. 26 is a view illustrating editing of an image, according to an embodiment. FIG. 27 is a view illustrating editing of an image, according to an embodiment. FIG. 28 is a view illustrating editing of an image, according to an embodiment. FIG. 29 is a view illustrating an operation of providing a preset, according to an embodiment.

At least some of the operations of FIG. 24 may be omitted. The operation order of the operations of FIG. 24 may be changed. Operations other than the operations of FIG. 24 may be performed before, while, or after performing the operations of FIG. 24.

Referring to FIG. 24, in operation 2401, according to an embodiment, the electronic device 101 (e.g., the processor 120) may convert an object to 3D based on depth information for the first image (e.g., object(s) included in the first image). For example, the electronic device 101 (e.g., the processor 120) may convert an object to 3D based on the depth information based on the first artificial intelligence algorithm for the first image (e.g., object(s) included in the first image). Operation 2401 may be understood with reference to operations 607 and 609 of FIG. 6 and operation 807 of FIG. 8. An overlapping description is omitted.

In operation 2403, according to an embodiment, the electronic device 101 (e.g., the processor 120) may select preset editing. For example, the electronic device 101 may select preset editing based on a user input for selecting preset editing. When preset editing is selected, the electronic device 101 may perform operation 2405, operation 2407, and operation 2409.

In operation 2405, according to an embodiment, the electronic device 101 (e.g., the processor 120) may provide a preset for editing an image. For example, the electronic device 101 may display a screen (or a list) for selecting one of a plurality of presets for editing an image. The electronic device 101 may display a screen for selecting one of a plurality of presets for editing an image by analyzing an image to be edited. An example of a preset may be described with reference to the embodiments described below (e.g., FIGS. 25, 26, 27, 28, and 29).

In operation 2407, according to an embodiment, the electronic device 101 (e.g., the processor 120) may select one of the plurality of presets for editing an image based on a user input. In operation 2409, according to an embodiment, the electronic device 101 (e.g., the processor 120) may apply the selected preset to the image.

With respect to operations 2405, 2407, and 2409, referring to FIG. 25, the electronic device 101 (e.g., the processor 120) may select a 2D image (e.g., the image 2310 of FIG. 23) including a plurality of person objects and convert (2510) objects included in the selected image to 3D. In FIG. 25, the electronic device 101 may provide a preset for changing a formation of person objects, a preset for changing a pose of person objects, or a preset for recommending dynamic poses of person objects. The electronic device 101 may display an image 2520 to which a change in formation of person objects has been applied on the display 414, based on selection of a preset for changing a formation of person objects. The electronic device 101 may display an image 2530 to which a change in pose of person objects has been applied on the display 414, based on selection of a preset for changing a pose of person objects. The electronic device 101 may display an image 2540 reflecting dynamic poses of person objects on the display 414, based on selection of a preset for recommending dynamic poses of person objects. After a preset is applied, the electronic device 101 may generate a 2D image reflecting a result of editing based on an event for causing an end of editing.

With respect to operations 2405, 2407, and 2409, referring to FIG. 26, the electronic device 101 (e.g., the processor 120) may select a 2D image (e.g., the image 2310 of FIG. 23) including a plurality of person objects and convert (2610) objects included in the selected image to 3D. For example, the converted image 2610 may include a plurality of objects including a first object 2611 and a second object 2612. In FIG. 26, the electronic device 101 may provide a preset for changing a height of the first object 2611 among person objects, a preset for changing a hairstyle of the second object 2612 among person objects, or a preset for changing body proportions of person objects. The electronic device 101 may display an image 2620 including an object 2621 reflecting a change in height of the first object 2611 on the display 414, based on selection of a preset for changing a height of the first object 2611 among person objects. The electronic device 101 may display an image 2630 including an object 2632 reflecting a change in hairstyle of the second object 2612 on the display 414, based on selection of a preset for changing a hairstyle of the second object 2612 among person objects. The electronic device 101 may display an image 2640 reflecting a change in body proportions of person objects on the display 414, based on selection of a preset for changing body proportions of person objects. After a preset is applied, the electronic device 101 may generate a 2D image reflecting a result of editing based on an event for causing an end of editing.

With respect to operations 2405, 2407, and 2409, referring to FIG. 27, the electronic device 101 (e.g., the processor 120) may select a 2D image (e.g., the image 2310 of FIG. 23) including a plurality of person objects and convert (2710) objects included in the selected image to 3D. In FIG. 27, the electronic device 101 may provide a preset for changing a color of pants of person objects, or a preset for changing a skin color of person objects. The electronic device 101 may display an image 2720 reflecting a change in color of pants of person objects on the display 414, based on selection of a preset for changing a color of pants of person objects. The electronic device 101 may display an image 2730 reflecting a change in skin color of person objects on the display 414, based on selection of a preset for changing a skin color of person objects. After a preset is applied, the electronic device 101 may generate a 2D image reflecting a result of editing based on an event for causing an end of editing.

In operation 2411, according to an embodiment, the electronic device 101 (e.g., the processor 120) may select direct editing. For example, the electronic device 101 may select direct editing based on a user input for selecting direct editing. When direct editing is selected, the electronic device 101 may perform operation 2413.

In operation 2413, according to an embodiment, the electronic device 101 (e.g., the processor 120) may edit (e.g., directly edit) a target object based on a user input. For example, referring to FIG. 28, a 2D image (e.g., the image 2310 of FIG. 23) including a plurality of person objects may be selected, and objects included in the selected image may be converted (2810) to 3D. The electronic device 101 may display an image 2820 reflecting a change (2821) in pose on the display 414, based on a user input for changing poses of the plurality of person objects. The electronic device 101 may display an image 2840 reflecting a change in pose of a person object 2841 on the display 414, based on a user input for changing a pose of one person object among the plurality of person objects. The electronic device 101 may display an image 2830 reflecting a change in positions and postures of the plurality of person objects on the display 414, based on a user input for changing positions and postures of the plurality of person objects. For example, in FIG. 28, the electronic device 101 may change a pose of a person object by bending (rigging) an elbow of the person object based on a user input.

With respect to operations 2405, 2407, and 2409, referring to FIG. 29, the electronic device 101 (e.g., the processor 120) may select a 2D image including a landscape object (e.g., a mountain), an object (e.g., an airplane), and a background object (e.g., a sky) and convert (2900) objects included in the selected image to 3D. In FIG. 29, the electronic device 101 may identify a target object 2901 and provide a preset for the target object 2901. For example, the electronic device 101 may provide a preset 2910 for changing a logo included in an appearance of the target object 2901 (e.g., an airplane), a preset 2920 for changing an appearance (e.g., a wheel) of the target object 2901 (e.g., an airplane), or a preset 2930 for changing a color of the target object 2901 (e.g., an airplane). For example, the electronic device 101 may provide a preset (e.g., 2940, 2950, 2960) for recommending an object of a category that is identical or similar to a category (e.g., an airplane) of the target object 2901 (e.g., an airplane). For example, the electronic device 101 may provide a preset for recommending an object of a category associated with a category of the target object 2901 (e.g., an airplane) (e.g., 2970 for recommending a hot air balloon, 2980 for recommending a bird, 2990 for recommending a spaceship).

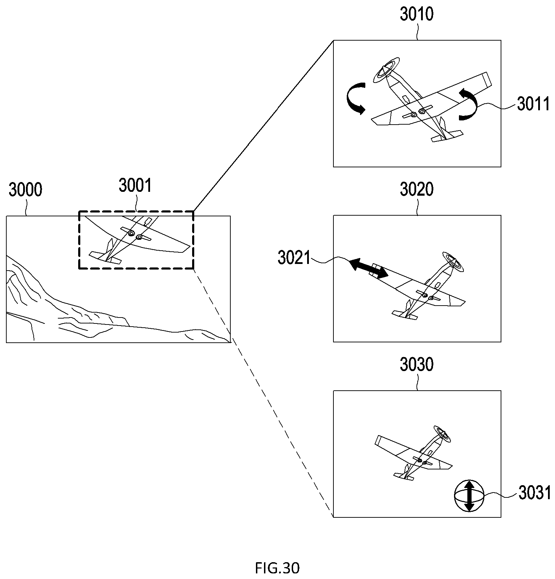

With respect to operation 2413, referring to FIG. 30, the electronic device 101 may display an icon for causing editing of an object for direct editing by a user input. For example, in FIG. 30, the electronic device 101 may select a 2D image including a landscape object (e.g., a mountain), an object (e.g., an airplane), and a background object (e.g., a sky) and convert (3000) objects included in the selected image to 3D. The electronic device 101 may identify a target object 3001. The electronic device 101 may display an icon for causing editing of the target object 3001. For example, in 3010, the electronic device 101 may display an icon 3011 for rotating the target object. For example, in 3020, the electronic device 101 may display an icon 3021 for changing a size of the target object. For example, in 3030, the electronic device 101 may display an icon 3031 for moving a position of the target object. The electronic device 101 may edit the target object based on a user input for an icon for causing editing of an object.

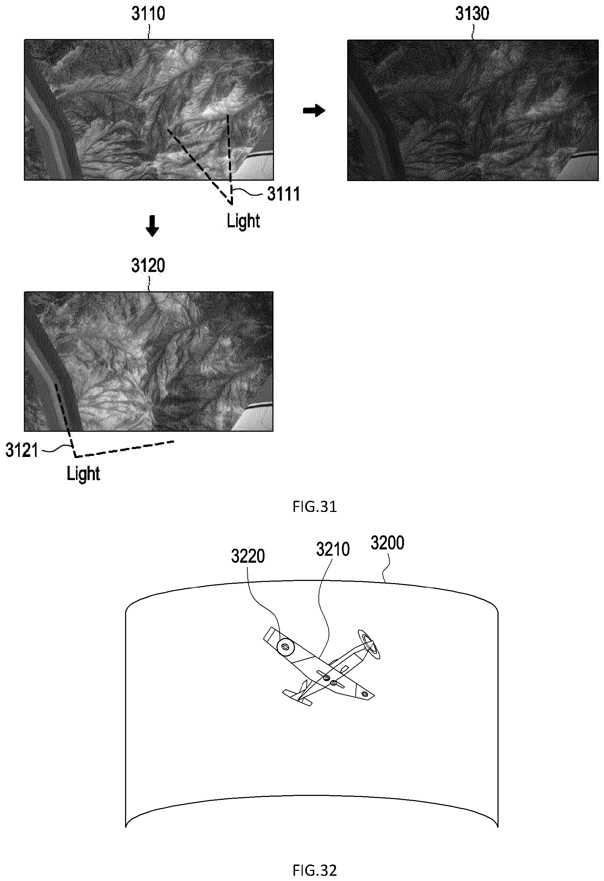

Referring to FIG. 31, according to an embodiment, the electronic device 101 (e.g., the processor 120) may change a property of a space. For example, in FIG. 31, the electronic device 101 may display an image 3110 representing light illuminating from a first direction 3111 on the display 414. The electronic device 101 may display an image 3120 representing light illuminating from a second direction 3121 on the display 414, based on a user input for causing a change in a direction in which light illuminates. The electronic device 101 may display an image 3130 representing changed illuminance on the display 414, based on a user input for causing a change in illuminance.

FIG. 32 is a view illustrating gaze tracking, according to an embodiment.

Referring to FIG. 32, according to an embodiment, the electronic device 101 (e.g., the processor 120) may place a target object 3210 in an editing space 3200. The electronic device 101 may track a gaze of a user. The electronic device 101 may display an icon 3220 indicating a gaze of the user in the editing space 3200. While the icon 3220 indicating the gaze of the user is displayed, the electronic device 101 may edit the target object 3210 based on the gaze and/or a gesture of the user.

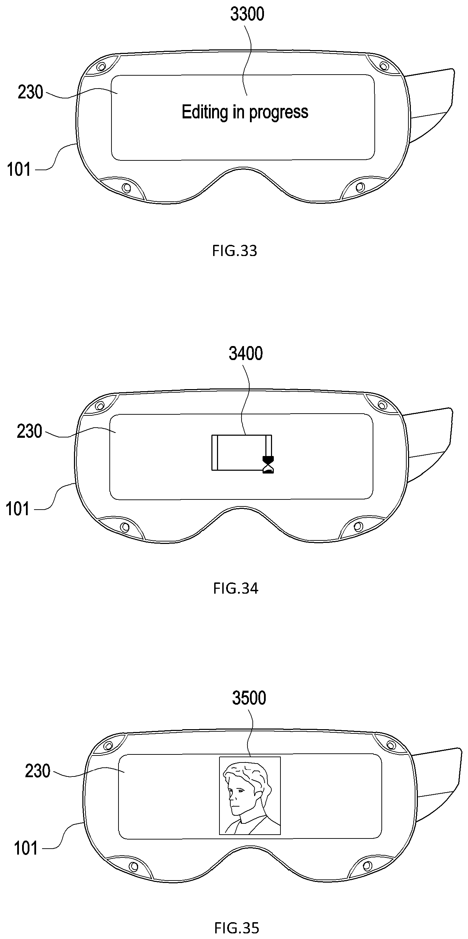

FIG. 33 is a view illustrating an operation of indicating that editing is in progress, according to an embodiment. FIG. 34 is a view illustrating an icon indicating that editing is in progress, according to an embodiment. FIG. 35 is a view illustrating an operation of displaying an editing state on an external display, according to an embodiment. FIGS. 33, 34, and 35 may be described with reference to the previously described embodiments and the embodiments described below.

Referring to FIG. 33, in the case of the electronic device 101 of FIGS. 2 and 3, the electronic device 101 (e.g., the processor 120) may display a screen indicating that editing is in progress (e.g., a screen including text 3300 of "Editing") on the second display 230 while a screen for editing is displayed on the first display 221.

Referring to FIG. 34, in the case of the electronic device 101 of FIGS. 2 and 3, the electronic device 101 (e.g., the processor 120) may display a screen indicating that editing is in progress (e.g., a screen including an icon 3400 indicating that editing is in progress) on the second display 230 while a screen for editing is displayed on the first display 221.

Referring to FIG. 35, in the case of the electronic device 101 of FIGS. 2 and 3, the electronic device 101 (e.g., the processor 120) may display a screen corresponding to a screen for editing (e.g., a screen including an object 3500 corresponding to an object being edited) on the second display 230 while a screen for editing is displayed on the first display 221.

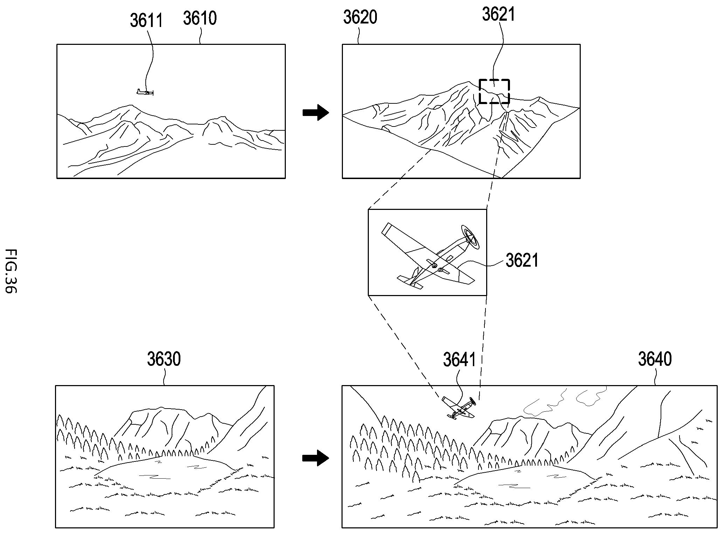

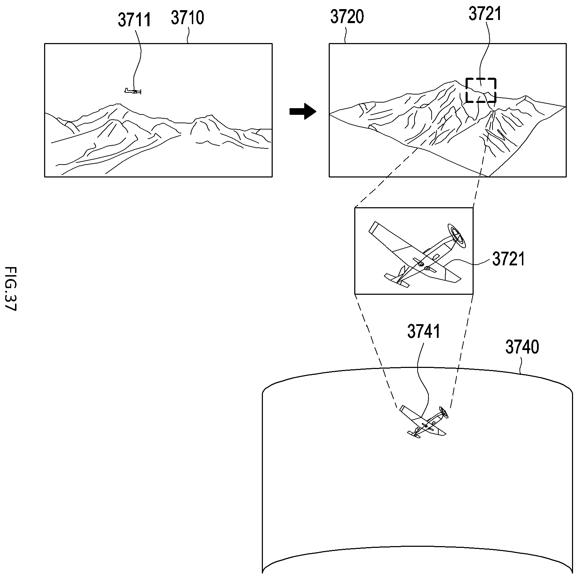

FIG. 36 is a view illustrating copying of an object to another image, according to an embodiment. FIG. 37 is a view illustrating copying of an object to an empty space or a surrounding environment, according to an embodiment. FIGS. 36 and 37 may be described with reference to the previously described embodiments and the embodiments described below.

Copying of an object may be described with reference to FIGS. 36 and 37.

For example, in FIG. 36, the electronic device 101 (e.g., the processor 120) may select a 2D first image 3610 and a 2D second image 3630. The first image 3610 may include a target object 3611. The electronic device 101 may display a third image 3620 obtained by converting the first image 3610 to 3D, and a fourth image 3640 obtained by converting the second image 3630 to 3D, together in an editing space. The electronic device 101 may display an object 3641 corresponding to the target object 3621 in the fourth image 3640 based on a user input for causing copying of a target object 3621 included in the third image 3620.

For example, in FIG. 37, the electronic device 101 (e.g., the processor 120) may select a 2D first image 3710. The first image 3710 may include a target object 3711. The electronic device 101 may display a second image 3720 obtained by converting the first image 3710 to 3D. The electronic device 101 may place an object 3741 corresponding to the target object 3721 in an editing space 3740 (e.g., an empty space or a surrounding environment (e.g., an image related to a surrounding environment acquired through the VST camera modules 211, 212)) based on a user input for causing copying of a target object 3721 included in the second image 3720.

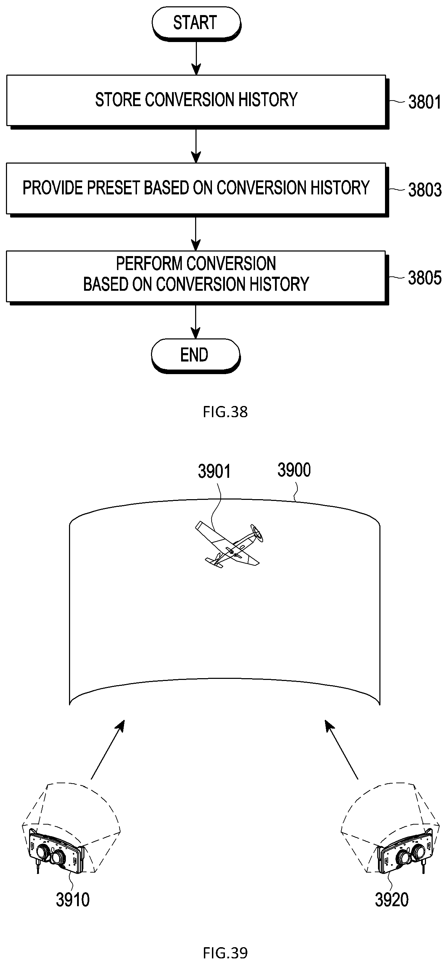

FIG. 38 is a view illustrating a conversion history of a property of an object, according to an embodiment. FIG. 38 may be described with reference to the above described embodiments and embodiments described below.

At least some of the operations of FIG. 38 may be omitted. The operation order of the operations of FIG. 38 may be changed. Operations other than the operations of FIG. 38 may be performed before, while, or after performing the operations of FIG. 38.

Referring to FIG. 38, in operation 3801, according to an embodiment, the electronic device 101 (e.g., the processor 120) may store a conversion history based on editing of an object. For example, the electronic device 101 may store a conversion history based on editing of an object in the memory 130. The electronic device 101 may identify the conversion history stored in the memory 130. For example, the electronic device 101 may transmit a conversion history based on editing of an object to the server 400. The electronic device 101 may receive information related to the conversion history from the server 400.

In operation 3803, according to an embodiment, the electronic device 101 (e.g., the processor 120) may provide a preset based on the conversion history. For example, the electronic device 101 may set a priority based on a number of times selected among a plurality of presets, based on the conversion history. For example, the electronic device 101 may set a priority based on a most recent use history among a plurality of presets, based on the conversion history. The electronic device 101 may recommend a plurality of presets based on the priority.

In operation 3805, according to an embodiment, the electronic device 101 (e.g., the processor 120) may perform conversion of an image (or an object included in an image) based on the conversion history.

FIG. 39 is a view illustrating editing by a plurality of users, according to an embodiment.

For example, referring to FIG. 39, a first user may wear a first electronic device 3910 (e.g., a device corresponding to 101), and a second user may wear a second electronic device 3920 (e.g., a device corresponding to 101). The first electronic device 3910 may display an editing space 3900 including a target object 3901. The second electronic device 3920 may display the editing space 3900 including the target object 3901. Based on a position of the first electronic device 3910 or a direction in which the first electronic device 3910 faces, a first FOV of the first electronic device 3910 may be identified. Based on the first FOV of the first electronic device 3910, a direction in which the editing space 3900 and the target object 3901 are displayed on the first electronic device 3910 may be determined. Based on a position of the second electronic device 3920 or a direction in which the second electronic device 3920 faces, a second FOV of the second electronic device 3920 may be identified. Based on the second FOV of the second electronic device 3920, a direction in which the editing space 3900 and the target object 3901 are displayed on the second electronic device 3920 may be determined. Regardless of the first FOV and the second FOV, the first electronic device 3910 and the second electronic device 3920 may display the editing space 3900 and the target object 3901 in the same direction. A screen displayed on the first electronic device 3910 and a screen displayed on the second electronic device 3920 may be understood with reference to the previously described embodiments.

According to an embodiment, in FIG. 39, when editing by the first user of the first electronic device 3910 occurs, a screen reflecting the editing by the first user may be displayed on the first electronic device 3910. In this case, a screen reflecting the editing by the first user may also be displayed on the second electronic device 3920. Similarly, when editing by the second user of the second electronic device 3920 occurs, a screen reflecting the editing by the second user may be displayed on the second electronic device 3920. In this case, a screen reflecting the editing by the second user may also be displayed on the first electronic device 3910. Editing and display of a screen reflecting editing in FIG. 39 may be understood with reference to the previously described embodiments.

Those skilled in the art may understand that the embodiments described in this specification may be applied in a mutually crossed manner within an applicable range. For example, it will be understood by one of ordinary skill in the art that at least some operations of an embodiment described in the disclosure may be omitted and applied, or at least some operations of an embodiment may be applied in connection with each other.

Technical objects to be achieved herein are not limited to the foregoing technical objects, and other technical objects not mentioned may be clearly understood by those skilled in the art from the following description.

Effects obtainable from the disclosure are not limited to the above-mentioned effects, and other effects not mentioned may be clearly understood by those skilled in the art from the following description.

According to an embodiment, the electronic device 101 may include a first display 414, 221, at least one processor 120, and memory 130 storing instructions. The instructions, when executed by the at least one processor 120, may cause the electronic device 101 to select a first image based on a first user input for selecting the first image. The instructions, when executed by the at least one processor 120, may cause the electronic device 101 to identify first depth information for objects included in the first image. The instructions, when executed by the at least one processor 120, may cause the electronic device 101 to identify a first object and a background object among the objects included in the first image, based on the first depth information. The instructions, when executed by the at least one processor 120, may cause the electronic device 101 to control the first display 414, 221 to display a second object generated by converting the first object to a 3D object, and a background image corresponding to the background object, based on the first depth information. The instructions, when executed by the at least one processor 120, may cause the electronic device 101 to, based on identifying that the first object is an object to which 3D editing is applied, control the first display 414, 221 to display a first mark indicating that the second object is a target object.

According to an embodiment, the instructions, when executed by the at least one processor 120, may cause the electronic device 101 to identify, based on a first artificial intelligence algorithm, the first depth information for the objects included in the first image. The instructions, when executed by the at least one processor 120, may cause the electronic device 101 to identify, based on a second artificial intelligence algorithm, that the first object is the object to which the 3D editing is applied.

According to an embodiment, the first display 414, 221 may include a first sub-display 414, 221; 221a corresponding to a right eye of a user, and a second sub-display 414, 221; 221b corresponding to a left eye of the user. An image displayed on the first display 414, 221 may include a first sub image displayed on the first sub-display 414, 221; 221a and a second sub image displayed on the second sub-display 414, 221; 221b. The instructions, when executed by the at least one processor 120, may cause the electronic device 101 to, after controlling the first display 414, 221 to display the second object and the background image from a first view point based on the first depth information, identify a second user input for causing a change in view point. The instructions, when executed by the at least one processor 120, may cause the electronic device 101 to, based on the second user input, identify second depth information related to a second view point based on the first artificial intelligence algorithm. The instructions, when executed by the at least one processor 120, may cause the electronic device 101 to, based on the second depth information, control the first display 414, 221 to display a third object corresponding to the second object, and the background image from the second view point.

According to an embodiment, the instructions, when executed by the at least one processor 120, may cause the electronic device 101 to, based on a third user input for the third object, control the first display 414, 221 to display a fourth object reflecting a change in a first property of the third object, and the background image.

According to an embodiment, the instructions, when executed by the at least one processor 120, may cause the electronic device 101 to control the first display 414, 221 to display a preview corresponding to the first image while displaying the third object and the background image. The instructions, when executed by the at least one processor 120, may cause the electronic device 101 to, based on the change in the first property, control the first display 414, 221 to display the preview in which a property of an object corresponding to the fourth object among objects included in the preview has been changed.

According to an embodiment, the instructions, when executed by the at least one processor 120, may cause the electronic device 101 to, based on an end of editing, generate a second image including the background object, and a fifth object replacing the first object. The fifth object may reflect the change in the first property. The instructions, when executed by the at least one processor 120, may cause the electronic device 101 to control the first display 414, 221 to stop displaying the fourth object, the background image, and the preview, and to display the second image.

According to an embodiment, the instructions, when executed by the at least one processor 120, may cause the electronic device 101 to, based on identifying the second depth information, store the first depth information in the memory 130. The instructions, when executed by the at least one processor 120, may cause the electronic device 101 to, based on a change from the second view point to the first view point, control the first display 414, 221 to display the second object and the background image from the first view point based on the first depth information stored in the memory 130.

According to an embodiment, the instructions, when executed by the at least one processor 120, may cause the electronic device 101 to identify the first depth information by identifying the first depth information based on the first artificial intelligence algorithm stored in the memory 130.

According to an embodiment, the instructions, when executed by the at least one processor 120, may cause the electronic device 101 to identify the first depth information by transmitting information about the first image to a server 108, 400 and receiving the first depth information from the server 108, 400. The first depth information received from the server 108, 400 may be identified by the server 108, 400 based on the first artificial intelligence algorithm of the server 108, 400.

According to an embodiment, the second image may be an image corresponding to FOV of the user at a time of identifying the end of the editing.

According to an embodiment, the first display 414, 221 may be disposed on a first side of the electronic device 101 configured to face a face of the user when the electronic device 101 is worn on the face of the user. The electronic device 101 may include a second display 414, 230 disposed on a second side of the electronic device 101 opposite to the first side. The instructions, when executed by the at least one processor 120, may cause the electronic device 101 to control the second display 414, 230 to display an object corresponding to the second object, while displaying the second object on the first display 414, 221. The instructions, when executed by the at least one processor 120, may cause the electronic device 101 to control the second display 414, 230 to display an object corresponding to the third object, while displaying the third object on the first display 414, 221. The instructions, when executed by the at least one processor 120, may cause the electronic device 101 to control the second display 414, 230 to display an object corresponding to the fourth object, while displaying the fourth object on the first display 414, 221.

According to an embodiment, the instructions, when executed by the at least one processor 120, may cause the electronic device 101 to identify, among the objects included in the first image, an object that satisfies a specified criterion as the first object, based on the first depth information. The instructions, when executed by the at least one processor 120, may cause the electronic device 101 to identify, among the objects included in the first image, an object that does not satisfy the specified criterion as the background object, based on the first depth information.

According to an embodiment, a method for operating an electronic device 101 may include an operation of selecting a first image based on a first user input for selecting the first image. The method may include an operation of identifying first depth information for objects included in the first image. The method may include an operation of identifying a first object and a background object among the objects included in the first image, based on the first depth information. The method may include an operation of displaying a second object generated by converting the first object to a 3D object, and a background image corresponding to the background object, based on the first depth information. The method may include an operation of displaying a first mark indicating that the second object is a target object, based on identifying that the first object is an object to which 3D editing is applied.

According to an embodiment, in the method, the operation of identifying first depth information may include an operation of identifying the first depth information for the objects included in the first image based on a first artificial intelligence algorithm. The method may include an operation of identifying, based on a second artificial intelligence algorithm, that the first object is the object to which the 3D editing is applied.

According to an embodiment, the method may include an operation of, after controlling the first display 414, 221 to display the second object and the background image from a first view point based on the first depth information, identifying a second user input for causing a change in view point. The method may include an operation of, based on the second user input, identifying second depth information related to a second view point based on the first artificial intelligence algorithm. The method may include an operation of displaying a third object corresponding to the second object, and the background image from the second view point, based on the second depth information.

According to an embodiment, the method may include displaying a fourth object reflecting a change in a first property of the third object, and the background image, based on a third user input for the third object.

According to an embodiment, the method may include an operation of displaying a preview corresponding to the first image while displaying the third object and the background image. The method may include an operation of displaying the preview in which a property of an object corresponding to the fourth object among objects included in the preview has been changed, based on the change in the first property.

According to an embodiment, the method may include an operation of generating a second image including the background object, and a fifth object replacing the first object, based on an end of editing. The fifth object may reflect the change in the first property. The method may include an operation of stopping displaying the fourth object, the background image, and the preview, and displaying the second image.

According to an embodiment, the method may include an operation of storing the first depth information in memory 130 of the electronic device 101, based on identifying the second depth information. The method may include an operation of displaying the second object and the background image from the first view point based on the first depth information stored in the memory 130, based on a change from the second view point to the first view point.

According to an embodiment, the operation of identifying the first depth information may include an operation of identifying the first depth information by identifying the first depth information based on the first artificial intelligence algorithm stored in the memory 130.

According to an embodiment, the operation of identifying the first depth information may include an operation of identifying the first depth information by transmitting information about the first image to a server 108, 400 and receiving the first depth information from the server 108, 400. The first depth information received from the server 108, 400 may be identified by the server 108, 400 based on the first artificial intelligence algorithm of the server 108, 400.

According to an embodiment, the second image may be an image corresponding to FOV of the user at a time of identifying the end of the editing.

According to an embodiment, the method may include an operation of controlling a second display 414, 230 of the electronic device 101 to display an object corresponding to the second object, while displaying the second object on the first display 414, 221. The method may include an operation of controlling the second display 414, 230 to display an object corresponding to the third object, while displaying the third object on the first display 414, 221. The method may include an operation of controlling the second display 414, 230 to display an object corresponding to the fourth object, while displaying the fourth object on the first display 414, 221.

According to an embodiment, the method may include an operation of identifying, among the objects included in the first image, an object that satisfies a specified criterion as the first object, based on the first depth information. The method may include an operation of identifying, among the objects included in the first image, an object that does not satisfy the specified criterion as the background object, based on the first depth information.

According to an embodiment, in a storage medium storing computer-readable instructions, the instructions, when executed by at least one processor 120 of an electronic device 101, may cause the electronic device 101 to perform at least one operation. The at least one operation may include an operation of selecting a first image based on a first user input for selecting the first image. The at least one operation may include an operation of identifying first depth information for objects included in the first image. The at least one operation may include an operation of identifying a first object and a background object among the objects included in the first image, based on the first depth information. The at least one operation may include an operation of displaying a second object generated by converting the first object to a 3D object, and a background image corresponding to the background object, based on the first depth information. The at least one operation may include an operation of displaying a first mark indicating that the second object is a target object, based on identifying that the first object is an object to which 3D editing is applied.

According to an embodiment, in the storage medium, the operation of identifying first depth information may include an operation of identifying the first depth information for the objects included in the first image based on a first artificial intelligence algorithm. The at least one operation may include an operation of identifying, based on a second artificial intelligence algorithm, that the first object is the object to which the 3D editing is applied.

According to an embodiment, in the storage medium, the at least one operation may include an operation of, after controlling the first display 414, 221 to display the second object and the background image from a first view point based on the first depth information, identifying a second user input for causing a change in view point. The at least one operation may include an operation of, based on the second user input, identifying second depth information related to a second view point based on the first artificial intelligence algorithm. The at least one operation may include an operation of displaying a third object corresponding to the second object, and the background image from the second view point, based on the second depth information.

According to an embodiment, in the storage medium, the at least one operation may include displaying a fourth object reflecting a change in a first property of the third object, and the background image, based on a third user input for the third object.

According to an embodiment, in the storage medium, the at least one operation may include an operation of displaying a preview corresponding to the first image while displaying the third object and the background image. The at least one operation may include an operation of displaying the preview in which a property of an object corresponding to the fourth object among objects included in the preview has been changed, based on the change in the first property.

According to an embodiment, in the storage medium, the at least one operation may include an operation of generating a second image including the background object, and a fifth object replacing the first object, based on an end of editing. The fifth object may reflect the change in the first property. The at least one operation may include an operation of stopping displaying the fourth object, the background image, and the preview, and displaying the second image.

According to an embodiment, in the storage medium, the at least one operation may include an operation of storing the first depth information in memory 130 of the electronic device 101, based on identifying the second depth information. The at least one operation may include an operation of displaying the second object and the background image from the first view point based on the first depth information stored in the memory 130, based on a change from the second view point to the first view point.

According to an embodiment, in the storage medium, the operation of identifying the first depth information may include an operation of identifying the first depth information by identifying the first depth information based on the first artificial intelligence algorithm stored in the memory 130.

According to an embodiment, in the storage medium, the operation of identifying the first depth information may include an operation of identifying the first depth information by transmitting information about the first image to a server 108, 400 and receiving the first depth information from the server 108, 400. The first depth information received from the server 108, 400 may be identified by the server 108, 400 based on the first artificial intelligence algorithm of the server 108, 400.

According to an embodiment, in the storage medium, the second image may be an image corresponding to FOV of the user at a time of identifying the end of the editing.

According to an embodiment, in the storage medium, the at least one operation may include an operation of controlling a second display 414, 230 of the electronic device 101 to display an object corresponding to the second object, while displaying the second object on the first display 414, 221. The at least one operation may include an operation of controlling the second display 414, 230 to display an object corresponding to the third object, while displaying the third object on the first display 414, 221. The at least one operation may include an operation of controlling the second display 414, 230 to display an object corresponding to the fourth object, while displaying the fourth object on the first display 414, 221.

According to an embodiment, in the storage medium, the at least one operation may include an operation of identifying, among the objects included in the first image, an object that satisfies a specified criterion as the first object, based on the first depth information. The at least one operation may include an operation of identifying, among the objects included in the first image, an object that does not satisfy the specified criterion as the background object, based on the first depth information.

According to an embodiment, the electronic device 101 may provide a user with an experience of entering an image, experiencing an environment, and editing the image. The electronic device 101 may enter an editing space in which a target object included in a 2D image may be edited, display a screen allowing a user to directly view an object and an environment generated based on generative artificial intelligence in real-time, and generate an image in which an edited property of an object is reflected.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., an electronic device). For example, a processor (e.g., a controller) of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first display (414; 221);
at least one processor (120); and
memory (130) storing instructions,
wherein the instructions, when executed by the at least one processor (120), cause the electronic device (101) to:
select a first image, based on a first user input for selecting the first image,
identify first depth information for objects included in the first image,
identify a first object and a background object among the objects included in the first image, based on the first depth information,
control the first display (414; 221) to display a second object generated by converting the first object to a three-dimensional (3D) object, and a background image corresponding to the background object, based on the first depth information, and
based on identifying that the first object is an object to which 3D editing is applied, control the first display (414; 221) to display a first mark indicating that the second object is a target object.

2. The electronic device (101) of claim 1, wherein the instructions, when executed by the at least one processor (120), cause the electronic device (101) to:
identify, based on a first artificial intelligence algorithm, the first depth information for the objects included in the first image, and
identify, based on a second artificial intelligence algorithm, that the first object is the object to which the 3D editing is applied.

3. The electronic device (101) of claim 1 or 2, wherein the first display (414; 221) includes a first sub-display (414; 221; 221a) corresponding to a right eye of a user, and a second sub-display (414; 221; 221b) corresponding to a left eye of the user,
wherein an image displayed on the first display (414; 221) includes a first sub-image displayed on the first sub-display (414; 221; 221a) and a second sub-image displayed on the second sub-display (414; 221; 221b), and
wherein the instructions, when executed by the at least one processor (120), cause the electronic device (101) to:
after controlling the first display (414; 221) to display the second object and the background image from a first view point based on the first depth information, identify a second user input for causing a change in view point,
based on the second user input, identify second depth information related to a second view point based on the first artificial intelligence algorithm, and
based on the second depth information, control the first display (414; 221) to display a third object and the background image from the second view point, the third object corresponding to the second object.

4. The electronic device (101) of any one of claims 1 to 3, wherein the instructions, when executed by the at least one processor (120), cause the electronic device (101) to:
based on a second user input for the third object, control the first display (414; 221) to display a fourth object and the background image, the fourth object reflecting a change in a first property of the third object.

5. The electronic device (101) of any one of claims 1 to 4, wherein the instructions, when executed by the at least one processor (120), cause the electronic device (101) to:
control the first display (414; 221) to display a preview corresponding to the first image while displaying the third object and the background image, and
based on the change in the first property, control the first display (414; 221) to display the preview in which a property of an object corresponding to the fourth object among objects included in the preview has been changed.

6. The electronic device (101) of any one of claims 1 to 5, wherein the instructions, when executed by the at least one processor (120), cause the electronic device (101) to:
based on an end of editing, generate a second image including the background object and a fifth object replacing the first object, wherein the fifth object reflects the change in the first property, and
control the first display (414; 221) to stop displaying the fourth object, the background image, and the preview, and to display the second image.

7. The electronic device (101) of any one of claims 1 to 6, wherein the instructions, when executed by the at least one processor (120), cause the electronic device (101) to:
based on identifying the second depth information, store the first depth information in the memory (130),
based on the change from the second view point to the first view point, control the first display (414; 221) to display the second object and the background image from the first view point based on the first depth information stored in the memory (130).

8. The electronic device (101) of any one of claims 1 to 7, wherein the instructions, when executed by the at least one processor (120), cause the electronic device (101) to:
identify the first depth information by identifying the first depth information based on the first artificial intelligence algorithm included in the electronic device (101).

9. The electronic device (101) of any one of claims 1 to 8, wherein the instructions, when executed by the at least one processor (120), cause the electronic device (101) to:
identify the first depth information by transmitting information about the first image to a server (108; 400) and receiving the first depth information from the server (108; 400), and
wherein the first depth information received from the server (108; 400) is identified by the server (108; 400) based on the first artificial intelligence algorithm included in the server (108; 400).

10. The electronic device (101) of any one of claims 1 to 9, wherein the second image is an image corresponding to field of view (FOV) at a time of identifying the end of the editing.

11. The electronic device (101) of any one of claims 1 to 10, wherein the first display (414; 221) is disposed on a first side of the electronic device (101) configured to face a face of the user when the electronic device (101) is worn on the face of the user,
wherein the electronic device (101) further comprises a second display (414; 230) disposed on a second side of the electronic device (101) opposite to the first side, and
wherein the instructions, when executed by the at least one processor (120), cause the electronic device (101) to:
control the second display (414; 230) to display an object corresponding to the second object, while displaying the second object on the first display (414; 221),
control the second display (414; 230) to display an object corresponding to the third object, while displaying the third object on the first display (414; 221), and
control the second display (414; 230) to display an object corresponding to the fourth object, while displaying the fourth object on the first display (414; 221).

12. The electronic device (101) of any one of claims 1 to 11, wherein the instructions, when executed by the at least one processor (120), cause the electronic device (101) to:
identify, among the objects included in the first image, an object that satisfies a specified criterion as the first object, based on the first depth information, and
identify, among the objects included in the first image, an object that does not satisfy the specified criterion as the background object, based on the first depth information.

13. A method for operating an electronic device (101), the method comprising:
selecting a first image, based on a first user input for selecting the first image;
identifying first depth information for objects included in the first image;
identifying a first object and a background object among the objects included in the first image, based on the first depth information;
displaying a second object generated by converting the first object to a three-dimensional (3D) object, and a background image corresponding to the background object, based on the first depth information; and
based on identifying that the first object is an object to which 3D editing is applied, displaying a first mark indicating that the second object is a target object.

14. The method of claim 13, wherein identifying the first depth information includes identifying the first depth information for the objects included in the first image based on a first artificial intelligence algorithm, and
wherein the method includes identifying, based on a second artificial intelligence algorithm, that the first object is the object to which the 3D editing is applied.

15. A storage medium storing computer-readable instructions, wherein the instructions, when executed by at least one processor (120) of an electronic device (101), cause the electronic device (101) to perform at least one operation,
wherein the at least one operation includes:
selecting a first image, based on a first user input for selecting the first image;
identifying first depth information for objects included in the first image;
identifying a first object and a background object among the objects included in the first image, based on the first depth information;
displaying a second object generated by converting the first object to a three-dimensional (3D) object, and a background image corresponding to the background object, based on the first depth information; and
based on identifying that the first object is an object to which 3D editing is applied, displaying a first mark indicating that the second object is a target object.
